# EUROPEAN PATENT APPLICATION

(11) **EP 4 834 635 A1**
(43) Date of publication of application: **04.11.2026**
(21) Application number: 25736128.7
(22) Date of filing: 02.01.2025
(51) Int. Cl.: B60K 35/22

(54) **DISPLAY METHOD AND APPARATUS FOR IN-VEHICLE SCREEN, AND DEVICE, MEDIUM AND PROGRAM PRODUCT**

(30) Priority: 02.01.2024 CN 202410005578
(71) Applicant: Boe Technology Group Co., Ltd., Beijing 100015 (CN); Beijing BOE Technology Development Co., Ltd., Beijing 100176 (CN)
(72) Inventor: YU, Jing, Beijing 100176 (CN); ZHAO, Junjie, Beijing 100176 (CN); LI, Zhongxiao, Beijing 100176 (CN); ZHANG, Zhipeng, Beijing 100176 (CN); MA, Xitong, Beijing 100176 (CN); MENG, Xianqin, Beijing 100176 (CN); CHU, Xiao, Beijing 100176 (CN); FENG, Hongbo, Beijing 100176 (CN)
(74) Representative: Haseltine Lake Kempner LLP
(86) International application number: PCT/CN2025/070046
(87) International publication number: WO 2025/146063

(57) **Abstract**

The present application relates to the technical field of in-vehicle display. Disclosed are a display method and apparatus for an in-vehicle screen, and a device, a medium and a program product. An in-vehicle screen comprises a central control area and a co-driver area. The method comprises: controlling a target screen area of the in-vehicle screen to be in one of a plurality of display modes, wherein the target screen area comprises the co-driver area, and a co-driver usage area of the central control area; the plurality of display modes comprise a privacy mode and a shared mode; the privacy mode is a mode in which a main driver is prevented from viewing the target screen area; and the shared mode is a mode in which the main driver is allowed to view the target screen area. A screen area controllable by a co-driver has two display modes: the shared mode and the privacy mode, providing a dynamic privacy protection effect for the main driver.

## Description

The present disclosure claims priority to Chinese Patent Application No. 202410005578.X, filed on January 2, 2024, and entitled "DISPLAY METHOD AND APPARATUS FOR IN-VEHICLE SCREEN, DEVICE, MEDIUM, AND PROGRAM PRODUCT", the entire contents of which are incorporated herein by reference.

### TECHNICAL FIELD

The embodiments of the present disclosure relate to the field of in-vehicle displays, and particularly to a display method and apparatus for an in-vehicle screen, a device, a medium, and a program product.

### BACKGROUND

With the development of technology, in-vehicle technology has been continuously improved. With the increasing number of in-vehicle screens, the requirements for the in-vehicle screens are also becoming higher and higher. For example, the privacy requirements for in-vehicle screens have also increased accordingly.

Currently, the privacy technology for in-vehicle screens mainly includes attaching a privacy film to the screen or setting the entire in-vehicle screen as a privacy screen.

However, both of the above privacy technologies achieve a fixed privacy effect. As the driver moves, changes their body shape, or adjusts their seat, the driver can still see the content on the front passenger region. The overall privacy effect is poor, still causing a certain degree of impact on the driver's normal driving.

### SUMMARY

The embodiments of the present disclosure provide a display method and apparatus for an in-vehicle screen, a device, a medium, and a program product, enabling the screen region controllable by the passenger to have both a shared viewing mode and a private viewing mode simultaneously, providing a dynamic privacy effect for the driver. The technical solutions are as follows.

In an aspect, a display method for an in-vehicle screen is provided, wherein the in-vehicle screen includes a central control region and a front passenger region. The method includes:
controlling a target screen region of the in-vehicle screen to be in one of a plurality of display modes;
wherein the target screen region includes the front passenger region and a front passenger-use region of the central control region; and
the plurality of display modes include a private viewing mode and a shared viewing mode, wherein the private viewing mode is a mode that prevents a driver from viewing the target screen region, and the shared viewing mode is a mode that allows the driver to view the target screen region.

In one possible implementation, the front passenger-use region of the central control region is all or a portion of the central control region.

In one possible implementation, different regions of the target screen region have at least two private viewing levels.

In one possible implementation, the at least two private viewing levels differ in at least one of:
a backlight intensity;
a viewing angle range; or
a relative light intensity;
wherein the relative light intensity is a ratio of a first light intensity to a second light intensity in a current region, wherein the first light intensity is a light intensity that is perceivable by the driver in the private viewing mode, and the second light intensity is a light intensity that is perceivable by the driver in the shared viewing mode.

In one possible implementation, region positions of the different regions are determined based on at least one of:
a distance from the driver;
a distance from a passenger; or
a real-time ambient light intensity in the region.

In one possible implementation, the private viewing levels corresponding to the different regions are determined based on at least one of:
a distance from the driver;
a distance from a passenger; or
a real-time ambient light intensity in the region.

In one possible implementation, the different regions include at least two of:
the front passenger region; a left portion of the front passenger region; a middle portion of the front passenger region; aright portion of the front passenger region; an upper portion of the front passenger region; a lower portion of the front passenger region; the front passenger-use region; a left portion of the front passenger-use region; a middle portion of the front passenger-use region; a right portion of the front passenger-use region; an upper portion of the front passenger-use region; and a lower portion of the front passenger-use region.

In one possible implementation, the private viewing mode includes at least one of: the front passenger-use region being at a second private viewing level, and the front passenger region being at a first private viewing level;
the front passenger-use region being at a second private viewing level, a left portion of the front passenger-use region being at a third private viewing level, and a right portion of the front passenger-use region being at a first private viewing level;
a lower portion of the front passenger-use region being at a second private viewing level, and the front passenger-use region being at a first private viewing level;
the lower portion of the front passenger-use region being at a third private viewing level, an upper portion of the front passenger-use region being at a second private viewing level, and the front passenger-use region being at a first private viewing level;
the front passenger-use region being at a third private viewing level, and the front passenger region being at the first private viewing level; or
the front passenger-use region being at a third private viewing level, and the front passenger region being at a second private viewing level.

In one possible implementation, the method further includes:
in response to detecting that the front passenger-use region is included in the central control region and the front passenger region is in the private viewing mode, controlling the front passenger-use region to be in the private viewing mode; and
in response to detecting that the front passenger-use region is included in the central control region and the front passenger region is in the shared viewing mode, controlling the front passenger-use region to be in the shared viewing mode.

In one possible implementation, the method further includes:
based on an ambient light intensity captured by at least one ambient light sensor, determining a private viewing level of at least one region in the front passenger-use region, and/or determining a private viewing level of at least one region in the front passenger region.

In one possible implementation, the method further includes:
in response to detecting that the front passenger-use region is not included in the central control region and the front passenger region is in the private viewing mode, controlling the central control region to be in the shared viewing mode; and
in response to detecting that the front passenger-use region is not included in the central control region and the front passenger region is in the shared viewing mode, controlling the central control region to be in the private viewing mode.

In one possible implementation, the method further includes:
in response to a first condition beiung satisfied, determining that the target screen region is switched to the shared viewing mode.

In one possible implementation, the first condition includes at least one of:
turning off a drive device; content of an electronic rearview mirror being projected onto the front passenger region; or activating autonomous driving of Level 2 or above.

In one possible implementation, the method further includes:
in response to a second condition being satisfied, determining that the target screen region is switched to the private viewing mode.

In one possible implementation, the second condition includes at least one of:
starting up a drive device; content of an electronic rearview mirror not being projected into the front passenger region; or not activating autonomous driving of Level 2 or above.

In another aspect, a display apparatus for an in-vehicle screen is provided, wherein the in-vehicle screen includes a central control region and a front passenger region. The apparatus includes:
a control module, configured to control a target screen region of the in-vehicle screen to be in one of a plurality of display modes, wherein the target screen region includes the front passenger region and a front passenger-use region of the central control region;
wherein the plurality of display modes include a private viewing mode and a shared viewing mode, wherein the private viewing mode is a mode that prevents a driver from viewing the target screen region, and the shared viewing mode is a mode that allows the driver to view the target screen region.

In another aspect, a computer device is provided. The computer device includes a processor and a memory. The memory stores at least one instruction, at least one program, a code set, or an instruction set. The at least one instruction, the at least one program, the code set, or the instruction set, when loaded and executed by the processor, causes the processor to perform any of the above display methods for an in-vehicle screen.

In another aspect, a computer-readable storage medium is provided, wherein at least one instruction, at least one program, code set, or instruction set is stored in the storage medium. The at least one instruction, the at least one program, the code set, or the instruction set, when loaded and executed by a processor, causes the processor to perform any of the above display methods for an in-vehicle screen.

In another aspect, a computer program product or computer program is provided. The computer program product or computer program includes computer instructions stored in a computer-readable storage medium. A processor of the computer device, when reading and executing the computer instructions from the computer-readable storage medium, causing the computer device to perform any of the above display methods for an in-vehicle screen.

The technical solutions according to the embodiments of the present disclosure at least achieve the following beneficial effects.

The in-vehicle screen includes a central control region and a front passenger region, with a passenger-operable region within the central control region. The passenger can freely control the display mode of the target screen region, which includes the front passenger region and the front passenger-use region. In the private viewing mode, the driver is effectively prevented from seeing the content displayed in the target screen region, reducing driving distractions for the driver. In shared viewing mode, the target screen region can meet the simultaneously viewing requirement of the passenger and the driver, achieving a dynamic privacy effect.

### BRIEF DESCRIPTION OF DRAWINGS

For clearer descriptions of the technical solutions in the embodiments of the present disclosure, the following briefly describes the accompanying drawings required for describing the embodiments. Apparently, the accompanying drawings in the following description illustrate merely some embodiments of the present disclosure, and those of ordinary skill in the art can still derive other drawings from these accompanying drawings without creative efforts.
FIG. 1 is a schematic diagram of the in-vehicle equipment according to some embodiments of the present disclosure;
FIG. 2 is a flowchart of an in-vehicle display method according to some embodiments of the present disclosure;
FIG. 3 is a schematic diagram of an in-vehicle screen according to some embodiments of the present disclosure;
FIG. 4 is a schematic diagram of the working principle of the display module under the in-vehicle screen according to some embodiments of the present disclosure;
FIG. 5 is a flowchart of an in-vehicle display method according to some embodiments of the present disclosure;
FIG. 6 is a schematic diagram of the private viewing level in the second sub-mode according to some embodiments of the present disclosure;
FIG. 7 is a schematic diagram of the private viewing level in another second sub-mode according to some embodiments of the present disclosure;
FIG. 8 is a schematic diagram of the private viewing level in the sixth sub-mode according to some embodiments of the present disclosure;
FIG. 9 is a schematic diagram of the private viewing level in the ninth sub-mode according to some embodiments of the present disclosure;
FIG. 10 is a schematic diagram of the private viewing level in the seventeenth sub-mode according to some embodiments of the present disclosure;
FIG. 11 is a flowchart of an in-vehicle display method according to some embodiments of the present disclosure;
FIG. 12 is a schematic diagram of light rays emitted by various display modules in a private viewing mode according to some embodiments of the present disclosure;
FIG. 13 is a schematic diagram of light rays emitted by various display modules in a shared viewing mode according to some embodiments of the present disclosure;
FIG. 14 is a flowchart of another in-vehicle display method based on the embodiment shown in FIG. 13;
FIG. 15 is a flowchart of an in-vehicle display method according to some embodiments of the present disclosure;
FIG. 16 is a flowchart of another in-vehicle display method provided based on the embodiment shown in FIG. 15;
FIG. 17 is an adjustment schematic diagram of the light rays emitted under different private viewing levels according to some embodiments of the present disclosure;
FIG. 18 is a schematic diagram of determining a privacy protection region according to some embodiments of the present disclosure;
FIG. 19 is a schematic structural diagram of an in-vehicle screen according to some embodiments of the present disclosure;
FIG. 20 is a schematic diagram of the arrangement of liquid crystal and electrodes according to some embodiments of the present disclosure;
FIG. 21 is a schematic diagram corresponding to the viewing angle ranges of the display screen of the target screen region of display screen controlled under different voltages according to some embodiments of the present disclosure;
FIG. 22 is a schematic diagram corresponding to the privacy effect in the case where the privacy adjustment panel layer is implemented as different structures according to some embodiments of the present disclosure is implemented;
FIG. 23 is a structural block diagram of a display apparatus for an in-vehicle screen according to some embodiments of the present disclosure;
FIG. 24 is a structural block diagram of a display apparatus for an in-vehicle screen according to some embodiments of the present disclosure; and
FIG. 25 is a schematic diagram of the terminal structure according to some embodiments of the present disclosure.

These drawings and textual descriptions are not intended to limit the scope of the present disclosure in any way, but rather to illustrate the concepts of the present disclosure to those skilled in the art by reference to specific embodiments.

### DETAILED DESCRIPTION

To make the objectives, technical solutions, and advantages of the present disclosure clearer, the embodiments of the present disclosure will be further described in detail below in conjunction with the accompanying drawings. Obviously, the described embodiments are a part of the embodiments of the present disclosure, rather than all embodiments. Based on the embodiments in the present disclosure, all other embodiments obtained by those of ordinary skill in the art without creative effort fall within the scope of protection of the present disclosure.

In the present disclosure, terms such as "first", "second", or the like are used to distinguish between identical or similar items that have essentially the same function and effect. It should be understood that there is no logical or temporal dependency between "first" and "second", nor is there any limitation on quantity or execution order.

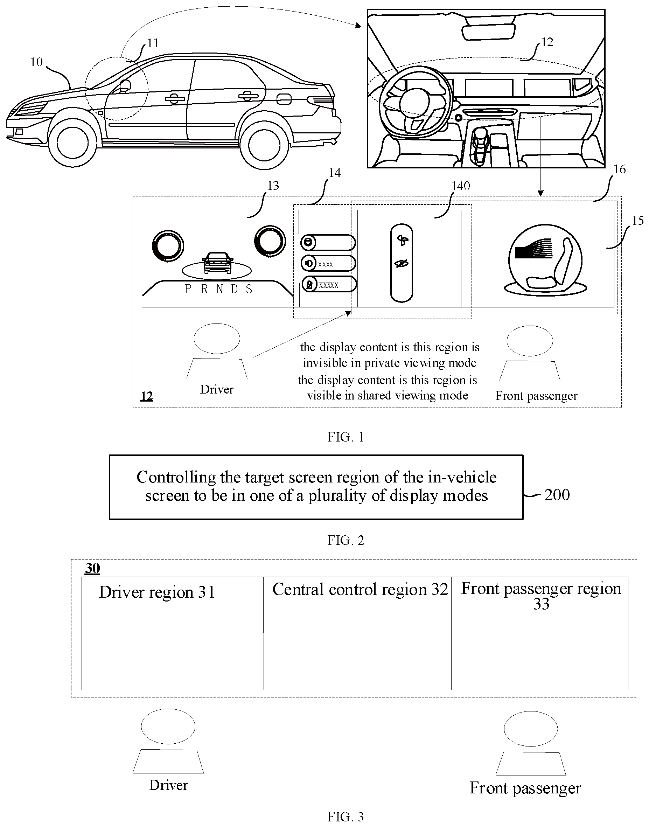

FIG. 1 shows a schematic diagram of an in-vehicle equipment 10 according to some embodiments of the present disclosure.

The front driving region 11 of the in-vehicle equipment 10 includes a driver region, a central control region, and a front passenger region. An in-vehicle screen 12 is formed in these three regions, wherein a screen is disposed in each region.

During travelling of the vehicle, the driver or passenger controls the in-vehicle equipment 10 to generate a control instruction, and the in-vehicle equipment 10 displays relevant content on the in-vehicle screen 12 based on the control instruction.

In the embodiments of the present disclosure, the in-vehicle screen 12 covers the driver region and the front passenger region. The in-vehicle screen 12 includes an instrument panel region 13 (the instrument panel region 13 is regarded as the driver region), a central control region 14, and a front passenger region 15. During driving, the driver mainly views the display content in the instrument panel region 13 and the central control region 14, and the passenger mainly views the display content in the central control region 14 and the front passenger region 15. The instrument panel region 13 is located in front of the driver, the front passenger region 15 is located in front of the passenger, and the central control region 14 is located between the instrument panel region 13 and the front passenger region 15. The central control region 14 includes a front passenger-use region 140, which can be freely controlled by the passenger.

Optionally, during driving, the driver's viewing requirement for the instrument panel region 13 is greater than the viewing requirement for the central control region 14 and/or the front passenger region 15.

In an optional embodiment, the above instrument panel region 13 is implemented as an independent screen region, and the central control region 14 and the front passenger region 15 are implemented as a dual-screen. Illustratively, the content displayed on the screen of the central control region 14 can be linked and displayed in the front passenger region 15. In another optional embodiment, the instrument panel region 13, central control region 14, and front passenger region 15 can also be implemented as a triple-screen.

In an optional embodiment, the above triple-screen can be directly implemented as a linked control system, that is, when an operation is performed on any one of the triple-screen , the display content corresponding to the operation is displayed on the remaining two screens. The specific implementation of the in-vehicle screen 12 is described in the following embodiments, which is not repeated herein.

In some embodiments of the present disclosure, when the passenger controls the display content in the front passenger-use region 140 or the front passenger region 15, the in-vehicle equipment 10 controls the front passenger-use region 140 or the front passenger region 15 to be in a private viewing mode or a shared viewing mode. The front passenger-use region 140 and the front passenger region 15 serve as dynamically privacy-adjusted screens, forming a target screen region 16.

In the private viewing mode, the target screen region 16 is unviewable to the driver, but is normally displayed for the passenger.

In shared viewing mode, the control operation of the target screen region 16 and the display content corresponding to the control operation are visible to the driver and the passenger.

In an optional embodiment, the front passenger-use region 140 is located closer to the driver than the front passenger region 15. In the private viewing mode, the privacy requirements for the front passenger-use region 140 are higher than the privacy requirements for the front passenger region 15.

In an optional embodiment, the switching of display mode of the above in-vehicle screen can be independently implemented by the in-vehicle equipment 10, or jointly implemented by the in-vehicle equipment 10 and the server.

In an optional embodiment, the in-vehicle equipment 10 perform data interaction via wired or wireless networks. The above wireless or wired networks employ standard communication technologies and/or protocols. The network is typically the Internet, but can also be any other network, including but not limited to local region network (LAN), metropolitan region network (MAN), wide Region network (WAN), mobile, wired, or wireless networks, private networks, or any combination of virtual private networks. In some embodiments, technologies and/or formats such as hyper text mark-up language (HTML) and extensible markup language (XML) are used to represent data exchanged over the network. Additionally, conventional encryption technologies such as secure socket layer (SSL), transport layer security (TLS), virtual private network (VPN), and internet protocol security (IPsec) can be employed to encrypt all or some links. In other embodiments, customized and/or proprietary data communication technologies can be used to replace or supplement the above data communication technologies.

It should be noted that the information (including but not limited to user equipment information, user personal information, and the like), data (including but not limited to data for analysis, stored data, displayed data, and the like), and signals involved in the present disclosure are all authorized by the users or fully authorized by the parties. The collection, use, and processing of relevant data shall comply with the relevant laws, regulations, and standards of the relevant countries and regions. For example, the two-dimensional cover image and two-dimensional disc elements involved in the present disclosure are all obtained with full authorization.

Based on the description of the implementation environment described above, the display method of the in-vehicle screen involved in the embodiments of the present disclosure will be explained. FIG. 2 is a flowchart of the in-vehicle display method according to some embodiments of the present disclosure, illustrating the application of this method in in-vehicle user equipment equipped with an in-vehicle screen. As shown in FIG. 2, the method includes the following processes.

In process 200, the target screen region of the in-vehicle screen is controlled to be in one of a plurality of display modes.

Optionally, the in-vehicle screen includes a central control region and a front passenger region.

Optionally, the in-vehicle screen also includes a driver region.

The above in-vehicle screen includes three regions, and the implementation forms of the in-vehicle screen are detailed below.

In a first implementation form, the driver region, central control region, and front passenger region in the in-vehicle screen are implemented as three independent screen regions. That is, the in-vehicle screen includes three screens. When the driver and/or the passenger controls the in-vehicle screen, they can control the three screens independently, or they can perform linked control of the three screens. In linked control, it is necessary to connect the driver region, central control region, and front passenger region, such as by placing the communication networks of the three regions on the same network.

In a second implementation form, the driver region and the central control region in the in-vehicle screen are implemented as dual-screen, and the front passenger region is implemented as an independent screen. That is, the in-vehicle screen includes two screens. In the dual-screen, the driver region and the central control region are divided based on a predetermined screen ratio. The in-vehicle equipment displays information related to the driving state in the driver region and displays information unrelated to the driving state in the central control region, such as displaying driving speed and vehicle status information in the driver region and displaying in-vehicle applications in the central control region. Optionally, the dual-screen and the front passenger region can be independently controlled and independently displayed, or can be implemented as linked control and display. In the case of linked control, the dual-screen and the front passenger region are connected, such as the communication network of the dual-screen and the front passenger region being on the same network. The display ratio of the driver region and the central control region in the dual-screen can be set based on actual conditions.

In a third implementation form, the driver region in the in-vehicle screen is implemented as an independent screen, and the central control region and the front passenger region are implemented as dual-screen. When the in-vehicle equipment is in the driving state, the driver's attention is mainly focused on the driving process, and the driver gives priority to information related to the driving state of the in-vehicle equipment. Therefore, the driver region is implemented as an independent screen to prevent interference from other display information to the driver. During the driving process, the passenger needs to use the front passenger region and the central control region, and the two regions are directly implemented as linked screens to further improve the passenger's operation efficiency. Optionally, the dual-screen and the driver region can be independently controlled and displayed, or can be implemented as linked control and display. In the case of linked control, the dual-screen and the driver region are connected, such as the dual-screen and the driver region being in the same communication network.

In a fourth implementation form, the driver region, central control region, and front passenger region in the in-vehicle screen are implemented as a triple screen. That is, the in-vehicle screen includes one screen, and based on the actual driving needs, the corresponding display content is displayed in the corresponding region of the triple screen. For example, taking the driver on the left side as an illustration, the driving speed and detailed information of the in-vehicle equipment are displayed in the left portion (driver region) of the in-vehicle screen, the navigation information is displayed in the middle portion (central control region) of the in-vehicle screen, and the entertainment information is displayed in the right portion (front passenger region) of the in-vehicle screen. The specific display content of each region can be displayed based on the actual driving status.

As shown in FIG. 3, the illustration is based on the driver being positioned on the left side of the in-vehicle equipment and the passenger being positioned on the right side. The in-vehicle screen 30 includes a driver region 31, a central control region 32, and a front passenger region 33. The driver region 31 is located in front of the driver, the front passenger region 33 is located in front of the passenger, and the central control region 32 is located between the driver region 31 and the front passenger region 33. The passenger controls the central control region 32 and the front passenger region 33, and the driver controls the central control region 32.

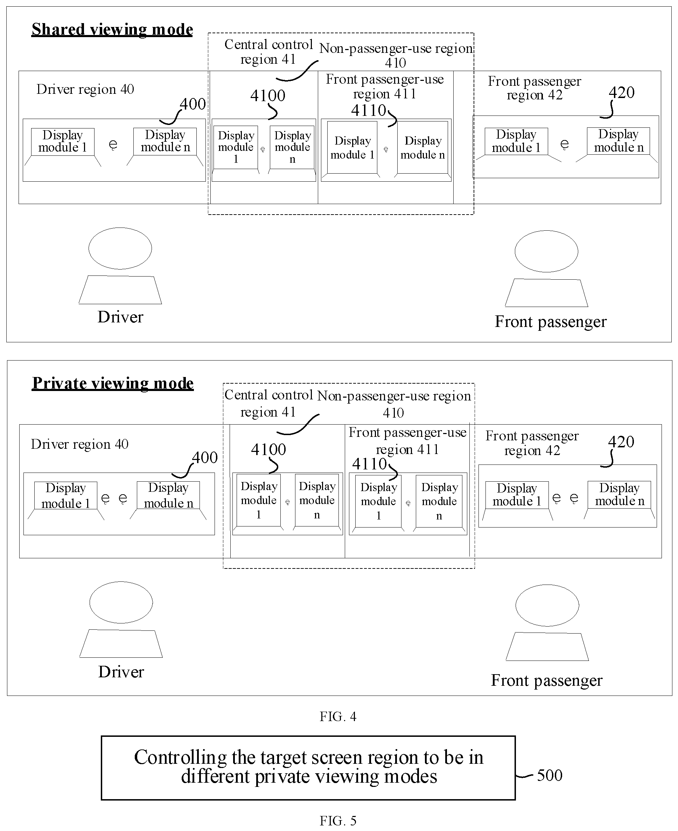

Optionally, the central control region also includes a front passenger-use region. The front passenger-use region is a portion of the display region in the central control region or the entire display region. As shown in FIG. 4, the in-vehicle screen includes a driver region 40, a central control region 41, and a front passenger region 42. The central control region 41 includes a non-front passenger-use region 410 and a front passenger-use region 411. The non-front passenger-use region 410 is the region in the central control region 41 other than the front passenger-use region 411. During driving, in order to meet the passenger's greater requirement for screen control, a portion or all of the central control region 41 is set as a region operable by the passenger, thus increasing the space for the passenger to operate the screen region.

In a first scenario, the front passenger-use region is implemented as a fixed region within the central control region.

Optionally, the central control region can be divided to provide a front passenger-use region based on a predetermined ratio. The scheme for dividing the front passenger-use region based on the predetermined ratio includes but is not limited to one of the following schemes.
I. In the case where the width of the central control region remains unchanged, a front passenger region-use is allocated based on a predetermined length ratio, wherein the predetermined length ratio is the ratio between the length of the central control region and the length of the front passenger region. Illustratively, the size information of the central control region is 12cm*7cm, and the predetermined length ratio is 2:1. The size information of the front passenger-use region is 6cm*7cm.
II. In the case where the length of the central control region remains unchanged, a front passenger-use region is allocated based on a predetermined width ratio, wherein the predetermined width ratio is the ratio between the width of the central control region and the width of the front passenger-use region. Illustratively, the size information of the central control region is 12cm*7cm, and the predetermined width ratio is 2:1. The size information of the front passenger-use region is 12cm*3.5cm.
III. The front passenger-use region is directly determined from the central control region based on the predetermined size ratio, wherein the predetermined size ratio is the ratio of the total region of the central control region to the total region of the front passenger-use region. Illustratively, the total area of the central control region is 84cm², the predetermined area ratio is 2:1, and the total area of the front passenger-use region is 42cm².

In the above three scenarios, the front passenger-use region is directly integrated into the central control region. For example, the size information of the central control region is 12cm*7cm, with a predetermined length ratio of 1:1. The sizes of the front passenger-use region are identical to the sizes of the central control region, also being 12cm*7cm.

In the second scenario, the front passenger-use region is implemented as a dynamically adjustable region within the central control region.

Optionally, the central control region and the front passenger region can be implemented as a linked control system.

When the front passenger region receives a screen expansion drag operation, the front passenger-use region in the central control region is determined based on the final position where the screen expansion drag operation stops. Wherein, the screen expansion drag operation is used to indicate the zoom-in of the interface content displayed in the front passenger region.

Optionally, the target screen region includes the front passenger region and the front passenger-use region described above.

Illustratively, when the passenger operates the target screen region in the in-vehicle screen, the display content of the target screen region changes accordingly. The driver, who is in the driving state, inevitably sees the changes in the interface of the target screen region, causing certain interference to the driver's driving. In the embodiments of the present disclosure, in order to further reduce the visual interference of the target screen region on the driver, the in-vehicle equipment controls the target screen region to be in one of the plurality of display modes.

Optionally, a plurality of display modes are available, including a private viewing mode a and shared viewing mode.

The private viewing mode is a mode that prevents the driver from viewing the target screen region. In this mode, the driver has a lower degree of visibility to the display content of the target screen region. That is, the driver is unable to visually read the image information on the target screen region, which enables the driver to maintain a more focused driving state without affecting the visual information reading of the passenger.

The shared viewing mode is a mode that allows the driver to view the target screen region. In this mode, the driver can see the display content of the target screen region. That is, the driver is able to visually read the image information on the target screen region.

Optionally, in the private viewing mode, because the front passenger-use region in the central control region is closer to the driver than the front passenger region, the privacy requirements for the central control region are higher than the privacy requirements for the front passenger region in this mode.

In the shared viewing mode, the display content (visual information) in the target screen region needs to be simultaneously readable by both the driver and the passenger. However, during driving, the passenger's control requirements for the target screen is greater than the driver's control requirements. Therefore, in this mode, the requirement for sharing visual information in the front passenger region is higher than the requirement for sharing visual information in the central control region.

In an optional embodiment, when the front passenger-use region in the central control region is a portion of the central control region, the central control region is divided into two different regions. The screen of the central control region other than the front passenger-use region is closer to the driver. When the in-vehicle equipment controls the front passenger-use region of the target screen region to be in the private viewing mode, the screen other than the front passenger-use region of the central control region still displays normally, and the visual information displayed on the screen can be read by the driver.

Optionally, a display module is provided under the in-vehicle screen, and a plurality of display modules are arranged in an array under the central control region and the front passenger region.

In different display modes, the working states of the first display module and the second display module are different. In the private viewing mode, the emitted light rays of the first display module on the driver side are in a vertical state or deflected to the right, and the corresponding emitted light rays of the second display module are in a normal emitting state, and the emitted light rays on both sides of the second display module are more concentrated compared to the light rays in normal display. In the shared viewing mode, the emitted light rays on both sides of the first display module are in a normal emitting state, and the emitted light rays on the driver side of the second display module are deflected to the left. Alternatively, the emitted light rays on both sides of the second display module are more divergent compared to the light rays in normal display.

In an optional embodiment, a portion of the central control region is implemented as a front passenger-use region. The first display module includes a first display sub-module and a second display sub-module, wherein the first display sub-module is located in the front passenger-use region, and the second display sub-module is located in other screen regions of the central control region other than the front passenger-use region. When switching between the private viewing mode and the shared viewing mode, the second display sub-module is always in the normal display state. Optionally, when the driver needs to block the display content of the entire central control region, the driver can control whether the second display sub-module is in the private viewing mode, which is not limited in the present disclosure.

As shown in FIG. 4, the driver region 40 includes a plurality of display modules 400, the non-front passenger region 410 includes a plurality of display modules 4100, the front passenger-use region 411 includes a plurality of display modules 4110, and the front passenger region 42 includes a plurality of display modules 420. In the private viewing mode, the plurality of display modules 400 and 4100 are in normal display state, the emitted light on the left side (closer to the driver) of the plurality of display modules 4110 is in a vertical state, the emitted light on the right side is in a normal emitting state, and the emitted light from both sides of the plurality of display modules 420 is more concentrated compared to the plurality of display modules 400. In shared viewing mode, the plurality of display modules 400 and 4100 are in normal display state, and the emitted light from the plurality of display modules 420 on the left side of the plurality of display modules 400 is deflected to the left.

In the embodiments of the present disclosure, by providing the central control region and the front passenger region in the in-vehicle screen, the front passenger-use region operable by the passenger exists in the central control region. The in-vehicle terminal freely controls the display mode of the target screen region, which includes the front passenger region and the front passenger-use region. In the private viewing mode, the driver can be effectively prevented from seeing the display content in the target screen region, thereby reducing driving distractions for the driver. In the shared viewing mode, the target screen region can satisfy the requirement of the passenger and the driver viewing the target screen region simultaneously, thereby achieving a dynamic privacy effect.

In an optional embodiment, the private viewing mode and shared viewing mode are switched only in the front passenger-use region within the central control region, and other screen regions in the central control region remain in normal display mode. In the case where the driver retains the ability to view visual information within the central control region, the front passenger-use region offers visual flexibility, and can control whether the front passenger-use region is in the private viewing mode, thereby achieving dynamic adjustment of privacy display effects and effectively enhancing the driving safety of the driver.

The following describes the display method for an in-vehicle screen according to the embodiments of the present disclosure. FIG. 5 is a flowchart of the setting process of the private viewing mode according to some embodiments of the present disclosure, illustrating the application of the method in an in-vehicle equipment including an in-vehicle screen. As shown in FIG. 5, the setting process of the private viewing mode includes process 500.

In process 500, the target screen region is controlled to be in different private viewing modes.

In the embodiments of the present disclosure, the front passenger-use region in the central control region and the front passenger region are both screen regions controlled by the passenger. When the passenger controls at least one of the two screen regions, the generated screen content is private to the passenger. For example, in the case where the passenger needs to complete office work in the target screen region, the display content in the relevant screen region is private, and the privacy requirements for the target screen region are higher, requiring less visibility to the driver. In another example, in the case where the passenger only completes office work in the front passenger region, and the front passenger-use region is idle (the idle state only represents that the front passenger-use region is unrelated to the passenger's office work, rather than indicating that the front passenger-use region is in a dormant state), and when the target screen region is controlled to be in the private viewing mode, the privacy requirements for the front passenger region are higher than the privacy requirements for the front passenger-use region.

Therefore, in the embodiments of the present disclosure, different private viewing levels are set for different regions of the target screen region, and different private viewing levels have different degrees of visibility to the driver. That is, different regions of the target screen region have at least two private viewing levels.

Optionally, at least two private viewing levels differ in at least one of: a backlight intensity, a screen luminance, a viewing angle range, or a relative light intensity.

The backlight intensity is configured to indicate the brightness value of the backlight source in liquid crystal display (LCD) technology. The light rays of the backlight are emitted from the side surface or back of the LCD display module. Under different private viewing levels, different regions of the target screen region correspond to different private viewing levels, and the ability of the driver to acquire visual information varies accordingly. Optionally, the higher the private viewing level, the lower the backlight intensity, and the lower the driver's ability to acquire visual information.

The screen luminance is configured to indicate the luminance value corresponding to each pixel or region in organic light-emitting diode (OLED) display technology.

The viewing angle range is configured to indicate the angular range within which the front and side surfaces of the screen can be observed by the driver in a driving state. The closer different regions of the target screen region are to the driver, the easier it is for the display content within that region to fall within the viewing angle range of the driver. Therefore, the closer a region is to the driver, the higher the private viewing level of that region.

The relative value of light intensity is used to indicate the ratio between the first light intensity and the second light intensity of the current region. The first light intensity represents the light intensity that the driver can see in the private viewing mode, and the second light intensity represents the light intensity that the driver can see in the shared viewing mode. The current region refers to any one or more screen regions within the target screen. Optionally, the light intensity refers to the screen luminance of the target screen region within the driver's viewing angle range. Optionally, the lower the value of the first light intensity, the lower the value of the relative light intensity, and the higher the private viewing level corresponding to that screen region.

In an optional embodiment, the relative light intensity is the light intensity generated inside the in-vehicle equipment due to the influence of external light intensity, or the light intensity generated by the real-time light intensity change corresponding to the region where the region inside the in-vehicle equipment is located, or the screen display brightness value corresponding to the region. The present disclosure does not impose any limitations on this.

In an optional embodiment, one or more ambient light sensors are provided in the in-vehicle equipment to detect the ambient light intensity. Based on the ambient light intensity captured by at least one ambient light sensor, the private viewing level of at least one region of the front passenger-use region is determined, and/or the private viewing level of at least one region of the passenger region is determined.

Optionally, an ambient light sensor detects external ambient light and internal ambient light, and determines the ambient light intensity in the region where the front passenger region and/or the front passenger-use region is located based on the external ambient light and internal ambient light. The private viewing level of at least one region of the front passenger-use region is determined, and/or the private viewing level of at least one region of the front passenger region is determined. The ambient light intensity can be determined based on the difference between the external ambient light and internal ambient light, the ratio of the external ambient light to internal ambient light, or the influence of the external ambient light on the internal ambient light, which is not limited in the present disclosure.

Optionally, the ambient light sensor is disposed in the central control region and/or the front driver's side window region of the in-vehicle equipment.

Optionally, the luminance sensors are disposed in all regions corresponding to the front passenger-use region and in all regions corresponding to the front passenger region. All display luminance values captured from the respective screen regions are arranged in ascending order. Based on the threshold range of the display luminance values, the private viewing level of at least one region in the front passenger-use region is determined, and/or the private viewing level of at least one region in the front passenger region is determined.

Based on the above content, the target screen region includes the front passenger-use region within the central control region and the front passenger region.

During driving, the driver has different privacy requirements for different regions of the target screen region. In the embodiments of the present disclosure, the target screen region includes different regions, and each region includes at least two of the following regions.

The regions are: a front passenger region;
a left portion of the front passenger region;
a right portion of the front passenger region;
a middle portion of the front passenger region;
an upper portion of the front passenger region;
a lower portion of the front passenger region;
a front passenger-use region;
a left portion of the front passenger-use region;
a right portion of the front passenger-use region;
a middle portion of the front passenger-use region;
an upper portion of the front passenger-use region; and
a lower portion of the front passenger-use region.

The region position of the above region is determined based on at least one factor, including the distance from the driver, the distance from the passenger, and the real-time ambient light intensity of the region.

The front passenger region is divided into the left portion of the front passenger region, the right portion of the front passenger region, the middle portion of the front passenger region, the upper portion of the front passenger region, and the lower portion of the front passenger region. The middle portion of the front passenger region is the region between the left portion and the right portion of the front passenger region, or the region between the upper portion and the lower portion of the front passenger region, which is not limited in the present disclosure.

The front passenger-use region is divided into the left portion of the front passenger-use region, the right portion of the front passenger-use region, the middle portion of the front passenger-use region, the upper portion of the front passenger-use region, and the lower portion of the front passenger-use region. The middle portion of the front passenger-use region is the region between the left portion and the right portion of the front passenger-use region, or the region between the upper portion and the lower portion of the front passenger-use region, which is not limited in the present disclosure.

Optionally, the above different regions can also exist in the following combinations.

The combinations are: the front passenger-use region and front passenger region;
the combination of the front passenger-use region and at least one of the designated regions of front passenger region;
the combination of the upper portion of the front passenger-use region and at least one of the designated regions of the front passenger region;
the combination of the lower portion of the front passenger-use region and at least one of the designated regions of the front passenger region;
the combination of the middle portion of the front passenger-use region and at least one of the designated regions of the front passenger region;
the combination of the left portion of the front passenger-use region and at least one of the designated regions of the front passenger region;
the combination of the right portion of the front passenger-use region and at least one of the designated regions of the front passenger region;
the combination of the front passenger region and at least one of the designated regions of the front passenger-use region;
the combination of the upper portion of the front passenger region and at least one of the designated regions of the front passenger-use region;
the combination of the lower portion of the front passenger region and at least one of the designated regions of the front passenger-use region;
the combination of the middle portion of the front passenger region and at least one of the designated regions of the front passenger-use region;
the combination of the left portion of the front passenger region and at least one of the designated regions of the front passenger-use region; or
the combination of the right portion of the front passenger region and at least one of the designated regions of the front passenger-use region.

For example, when the driver is on the left side of the in-vehicle equipment, the left side of the above different regions is closer to the driver. When the driver is on the right side of the in-vehicle equipment, the left side of the above different regions is closer to the passenger. For example, the farther a region is from the driver, the more the region is identified as the right portion of the front passenger region/front passenger-use region. The farther a region is from the passenger, the more the region is identified as the left portion of the front passenger region/front passenger-use region.

Optionally, taking the scenario where the driver is located on the left side of the in-vehicle equipment as an example, in normal driving state, the peripheral vision angle within the driver's visual range is more prone to capture visual information on the near side and the upper side of the driver. Therefore, changes in light intensity in the left and upper portions of the front passenger region/front passenger-use region are more likely to attract the driver's attention. Accordingly, the region with high real-time ambient light intensity in this region is identified as the left portion of the front passenger region/front passenger-use region or the upper portion of the front passenger region/front passenger-use region.

Optionally, the real-time ambient light intensity is the light intensity generated internally in the in-vehicle equipment due to the influence of external light intensity, or the light intensity generated by the real-time light intensity change corresponding to the region where the internal region of the in-vehicle equipment is located, or the screen display brightness value corresponding to that region, which is not limited in present disclosure.

The private viewing levels corresponding to different regions also vary. Optionally, the private viewing level of each region is determined based on at least one factor, such as the distance from the driver, the distance from the passenger, and the real-time ambient light intensity in the region.

For example, the closer the above region is to the driver, the higher the corresponding private viewing level. The closer the region is to the passenger, the lower the corresponding private viewing level. The higher the real-time ambient light intensity in the above region, the higher the corresponding private viewing level. Alternatively, the higher the ambient light intensity in the region where the driver is located, the higher the private viewing level of the region closer to the driver.

In another optional embodiment, the passenger controls the private viewing level of different regions within the target screen region independently. Privacy controls are disposed in the target screen region. When the passenger controls the target screen region and needs to protect the screen content that is about to be displayed, the privacy control can be triggered. When the in-vehicle equipment receives the trigger instruction corresponding to the privacy control, the in-vehicle equipment controls the current region to be in the private viewing mode.

In the embodiments of the present disclosure, for example, the private viewing level includes a first private viewing level, a second private viewing level, and a third private viewing level. The privacy effect of the first private viewing level is lower than that of the second private viewing level, which is lower than that of the third private viewing level. That is, the third private viewing level corresponds to a better privacy effect. The privacy effects corresponding to each private viewing level are explained in conjunction with the following content. In the following discussion, it is assumed that the central control region is closer to the driver and the front passenger region is farther from the driver.

In the first scenario, the private viewing level of different regions is determined based on the distance between the target screen region and the driver. The first private viewing level has the lowest privacy effect, the third private viewing level has the highest privacy effect, and the privacy effect of the second private viewing level is between the first private viewing level and the third private viewing level.
1. The private viewing mode for the central control region and the front passenger region is adjusted.

Optionally, the target screen region is controlled to be in a first sub-mode under the private viewing mode. The first sub-mode includes the central control region being at the second private viewing level, and the front passenger region being at the first private viewing level; the central control region being at the third private viewing level and the front passenger region being at the second private viewing level; or the central control region being at the third private viewing level and the front passenger region being at the first private viewing level. In this case, even if the central control region includes a front passenger-use region, when adjusting the private viewing mode, the front passenger-use region is incorporated into the overall adjustment of the central control region.

Optionally, the target screen region is controlled to be in a second sub-mode under the private viewing mode. The second sub-mode includes the upper portion of the central control region being in a third private viewing level or a second private viewing level, and the front passenger region being at a first private viewing level, wherein the screen region of the central control region other than the upper portion is in any one of the above three private viewing levels.

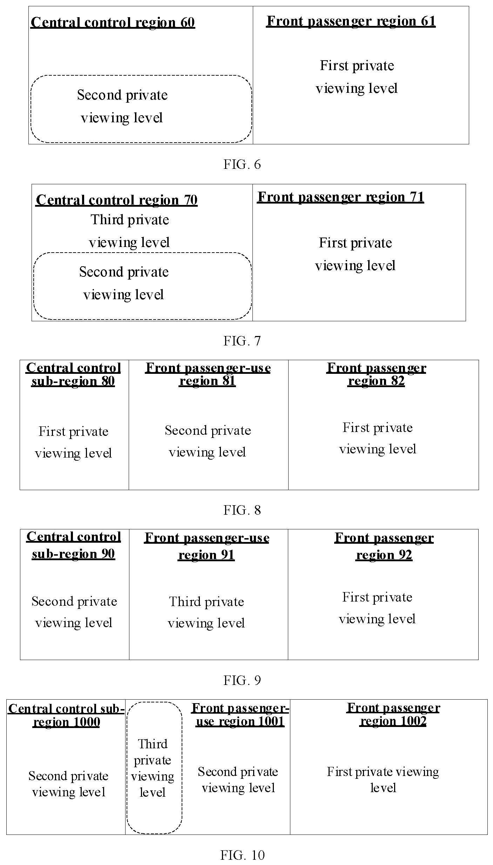

Optionally, the target screen region is controlled to be in a third sub-mode under the private viewing mode. The third sub-mode includes the lower portion of the central control region being at a third private viewing level or a second private viewing level, and the front passenger region being at a first private viewing level. The screen region of the central control region other than the lower portion is in any one of the above three private viewing levels. As shown in FIG. 6, FIG. 6 illustrates a setting method for one private viewing level under the second sub-mode. The lower portion of the central control region 60 is at a second private viewing level, and the front passenger region 61 is at a first private viewing level. As shown in FIG. 7, it illustrates another setting method for a private viewing level under the second sub-mode. The lower portion of the central control region 70 is at a second private viewing level, the region of the central control region 70 other than the lower portion is at a second private viewing level, and the front passenger region 71 is at a first private viewing level.

Optionally, the target screen region is controlled to be in a fourth sub-mode under the private viewing mode. The fourth sub-mode includes the central region of the central control region being at the third private viewing level or the second private viewing level, and the front passenger region being at the first private viewing level, wherein the screen regions of the central control region other than the central region are in any of the above three private viewing levels.

Optionally, the target screen region is controlled to be in a fifth sub-mode of the private viewing mode. The fifth sub-mode includes the left portion of the central control region being at the third private viewing level or the second private viewing level, and the front passenger region being at the first private viewing level. The screen region of the central control region other than the left portion is in any of the above three private viewing levels.

Optionally, the target screen region is controlled to be in a sixth sub-mode under the private viewing mode. The sixth sub-mode includes the right portion of the central control region being at the third private viewing level or the second private viewing level, and the front passenger region being at the first private viewing level, wherein the screen region of the central control region other than the right portion is in any of the above three private viewing levels.

II. Adjust the private viewing mode for the front passenger-use region and the front passenger region.

In the central control region, there is a passenger-user region accessible to the passenger. At this time, the central control region includes the central control sub-region and the front passenger-use region.

Optionally, the target screen region is controlled to be in a seventh sub-mode under the private viewing mode. The seventh sub-mode includes the front passenger-use region and the front passenger region being at the second private viewing level or the first private viewing level; the front passenger-use region being at the second private viewing level, and the front passenger region being at the first private viewing level; or the front passenger-use region being at the first private viewing level, and the front passenger region being at the second private viewing level, wherein the central control sub-region can be in any one of the above three private viewing levels. In this case, the privacy effect of the front passenger-use region and the privacy effect of the central control sub-region are separated. As shown in FIG. 8, it illustrates the setting method of private viewing levels for different regions in the sixth sub-mode. The central control sub-region 80 and the front passenger-use region 81 form a central control region that is at the second private viewing level, and the front passenger region 82 is at the first private viewing level.

Optionally, the target screen region is controlled to be in an eighth sub-mode under private viewing mode. The eighth sub-mode includes the central control sub-region being at a third private viewing level, the front passenger-use region being at a second private viewing level, and the front passenger region being at a first private viewing level. In this case, the privacy effect of the front passenger-use region is separated from the privacy effect of the central control sub-region.

Optionally, the target screen region is controlled to be in a ninth sub-mode under private viewing mode. The ninth sub-mode includes the central control sub-region being at the second private viewing level, the front passenger-use region being at the third private viewing level, and the front passenger region being at the first private viewing level. As shown in FIG. 9, FIG.9 illustrates the setting method of private viewing levels for different regions in the ninth sub-mode. The central control sub-region 90 is at the second private viewing level, the front passenger-use region 91 is at the third private viewing level, and the front passenger region 92 is at the first private viewing level.

Optionally, the target screen region is controlled to be in a tenth sub-mode under private viewing mode. The tenth sub-mode includes the left or upper portion of the front passenger-use region being at third private viewing mode, and the region of the front passenger-use region other than the left or upper portion being at second private viewing mode. The private viewing level of the front passenger region can be at any of the above three private viewing levels.

Optionally, the target screen region is controlled to be in an eleventh sub-mode under the private viewing mode. The eleventh sub-mode includes the middle portion of the front passenger-use region being at the third private viewing mode, and the regions other than the middle portion of the front passenger-use region are at the second private viewing mode. The private viewing level of the front passenger-use region can be at any of the above three private viewing levels.

Optionally, the target screen region is controlled to be in a twelfth sub-mode under the private viewing mode. The twelfth sub-mode includes the upper or lower portion of the front passenger-use region being at the third private viewing mode, and the regions of the front passenger-use region other than the upper or lower portion being at the second private viewing mode. The private viewing level of the front passenger region can be at any of the above three private viewing levels.

Optionally, the target screen region is controlled to be in a thirteenth sub-mode under the private viewing mode. The thirteenth sub-mode includes the middle portion of the front passenger-use region being at the third private viewing mode, and the regions of the front passenger-use region other than the middle portion being at the second private viewing mode. The private viewing level of the front passenger-use region can be at any of the above three private viewing levels.

In the second scenario, the private viewing level is determined based on whether control operations are performed on the front passenger-use region. The privacy effect of the first private viewing level is the lowest, the privacy effect of the third private viewing level is the highest, and the privacy effect of the second private viewing level is between the first and third private viewing levels. Notably, the third private viewing level is only applicable to the front passenger-use region.

Optionally, in this scenario, among the plurality of privacy sub-modes, the private viewing level of the central control sub-region can be set to a second private viewing level.

Optionally, in response to receiving a control operation for the upper portion of the front passenger-use region, the target screen region is controlled to be in a fourteenth sub-mode under the private viewing mode. The fourteenth sub-mode includes the upper portion of the front passenger-use region being at the third private viewing level, the lower portion of the front passenger-use region (where the lower portion refers to the region other than the upper portion) being at the second private viewing level, and the front passenger-use region being at the first private viewing level.

Optionally, in response to receiving a control operation for the lower portion of the front passenger-use region, the target screen region is controlled to be in a fifteenth sub-mode under the private viewing mode. The fifteenth sub-mode includes the lower portion of the front passenger-use region being at the third private viewing level, the upper portion of the front passenger-use region (where the upper portion refers to the region other than the lower portion) being at the second private viewing level, and the front passenger-use region being at the first private viewing level.

Optionally, in response to receiving a control operation for the middle portion of the front passenger-use region, the target screen region is controlled to be in a sixteenth sub-mode under the private viewing mode. The sixteenth sub-mode includes the middle portion of the front passenger-use region being at the third private viewing level, the upper and lower portions of the front passenger-use region (here, the upper and lower portions refer to regions other than the central region) being at the second private viewing level, and the front passenger-use region being at the first private viewing level.

Optionally, in response to receiving a control operation for the left portion of the front passenger-use region, the target screen region is controlled to be in a seventeenth sub-mode under the private viewing mode. The seventeenth sub-mode includes the left portion of the front passenger-use region being at the third private viewing level, the right portion of the front passenger-use region (the right portion refers to the region other than the left portion) being at the second private viewing level, and the front passenger-use region being at the first private viewing level. As shown in FIG. 10, FIG. 10 illustrates the setting method of private viewing levels for different regions in the seventeenth sub-mode. The central control sub-region 1000 is at the second private viewing level, the left portion of the front passenger-use region 1001 is at the third private viewing level, the right portion of the front passenger-use region 1001 is at the second private viewing level, and the front passenger-use region 1002 is at the first private viewing level.

Optionally, in response to receiving a control operation for the right portion of the front passenger-use region, the target screen region is controlled to be in an eighteenth sub-mode under the private viewing mode. The eighteenth sub-mode includes: the right portion of the front passenger-use region is at the third private viewing level, the left portion of the front passenger-use region (where the left portion refers to the region other than the right portion) is at the second private viewing level, and the front passenger-use region is at the first private viewing level.

Optionally, the above control operation is implemented as at least one of a click operation, a double-click operation, a voice control instruction, or a hover operation, primarily operating on the content displayed within the interface.

In the third scenario, the private viewing level is determined based on the privacy effect. The first private viewing level is configured to prevent light emitted from the front passenger region from entering the driver's view field, the second private viewing level is configured to achieve privacy for the passenger, and the third private viewing level is configured for newly added regions upon adjustment of the front passenger-use region.

Optionally, the front passenger-use region can be adjusted to indicate the adjusted display region of the front passenger-use region within the central control region. For example, in the case where the size information of the central control region is 12cm*4cm, and the size information of the front passenger-use region prior to adjustment is 7cm*4cm, adjusting the front passenger-use region results in size information of 9cm*4cm for the adjusted front passenger-use region.

In the embodiments of the present disclosure, the newly added region before and after the adjustment for passenger-use is used as the region for the third private viewing level, or the adjusted front passenger-use region is used as the region for the third private viewing level.

Optionally, in response to receiving a page adjustment operation for the front passenger-use region, the target screen region is controlled to be in the fourteenth sub-mode. The fourteenth sub-mode includes the front passenger region being at the first private viewing level, the newly added region upon adjustment of the front passenger-use region being at the third private viewing level, and the central control sub-region being at the second private viewing level.

In the fourth scenario, the private viewing level is set only for the front passenger-use region.

Optionally, different private viewing levels can be set for different regions of the front passenger-use region.

Optionally, the front passenger-use region is controlled to be in the fifteenth sub-mode. The fifteenth sub-mode includes the left portion of the front passenger-use region being at a third private viewing level, the middle portion of the front passenger-use region being at a second private viewing level, and the right portion of the front passenger-use region being at a first private viewing level. The privacy effect of the third private viewing level is higher than that of the second private viewing level, which is higher than that of the first private viewing level.

Optionally, the front passenger-use region is controlled to be in the sixteenth sub-mode. The sixteenth sub-mode includes: the upper portion of the front passenger-use region is at the third private viewing level, the middle portion of the front passenger-use region is at the second private viewing level, and the lower portion of the front passenger-use region is at the first private viewing level. Wherein, the privacy effect of the third private viewing level is higher than that of the second private viewing level, which is higher than that of the first private viewing level.

Optionally, the front passenger-use region is controlled to be in a seventeenth sub-mode based on the display luminance values of each region within the front passenger-use region. The seventeenth sub-mode includes regions within the front passenger-use region where the display luminance values are within a first predetermined range being at third private viewing mode, regions within the front passenger-use region where the display luminance values are within a second predetermined range being at the second private viewing mode, and regions within the front passenger-use region where the display luminance values are within a third predetermined range being at a first private viewing mode. The minimum value of the first predetermined range is greater than the maximum value of the second predetermined range, and the minimum value of the second predetermined range is greater than the maximum value of the third predetermined range. The specific range settings for display luminance values can be determined based on actual conditions, which are not limited in the present disclosure.

In the fifth scenario, a private viewing mode is set for the target screen region based on the passenger's use requirements for the region.

Optionally, whether a screen casting content is displayed in the target screen region is determined.

In the case where the passenger casts content to the target screen region for display and control, it implies that the content displayed in the target screen region possesses a certain degree of privacy, and it is not convenient for the driver to view. The target screen region can be set to a private viewing mode. That is, in response to the presence of cast content in the target screen region, the target screen region is controlled to be at the third private viewing mode.

In the case where the passenger operates the built-in application in the in-vehicle system within the target screen region, it implies that this part of the content does not possess a certain degree of privacy and can be jointly viewed by the driver and the passenger. During the passenger's operation, the private viewing level can be adjusted based on the screen display luminance of the target screen region. That is, in response to the absence of cast content in the target screen region and the display luminance of the target screen region exceeding a predetermined luminance threshold, the screen region within the target screen region where the display luminance exceeds the predetermined luminance threshold is adjusted to the third private viewing mode or the second private viewing mode, and the private viewing level of the region within the target screen region where the display luminance does not exceed the predetermined luminance threshold is lower than that of the screen region where the display luminance exceeds the predetermined luminance threshold.

Optionally, the private viewing level of in-vehicle applications within the target screen region is determined. Different in-vehicle applications correspond to varying private viewing levels. Illustratively, the private viewing level of social in-vehicle applications is higher than the private viewing level of entertainment in-vehicle applications and higher than navigation applications.

Optionally, based on the private viewing level of the in-vehicle application, the display region related to the in-vehicle application displayed in the target screen region can be set to a private viewing mode. The private viewing mode of the display region can be at the third private viewing level, the second private viewing level, or the first private viewing level. Alternatively, different private viewing levels can be set based on the private viewing level of the in-vehicle application. For illustrative purposes, in the case where the in-vehicle application is a social media software and the passenger is chatting on it, which has a higher private viewing level, the display interface corresponding to the social media software can be set to a third private viewing level.

Optionally, the display interfaces of a plurality of in-vehicle applications can be simultaneously controlled in the target screen region, and the display interfaces corresponding to a plurality of in-vehicle applications can be displayed side by side or included in a display. The present disclosure does not impose any limitations on this.

Based on the ranking results of private viewing levels for a plurality of in-vehicle applications, corresponding private viewing levels are set for different in-vehicle applications. Illustratively, when the passenger operates a social software and a navigation software simultaneously in the target screen region, the social display interface corresponding to the social software is displayed in the form of a floating window on the navigation display interface corresponding to the navigation software. The private viewing level of the social software is higher than that of the navigation software, and different private viewing levels are set for the social display interface and the navigation display interface, where the private viewing level of the social display interface is higher than that of the navigation display interface.

The sixth scenario involves determining the private viewing level based on the display states of the content displayed in the target screen region.

Optionally, in response to dynamic content being displayed in the target screen region, the display mode of the display region where the dynamic content is displayed can be adjusted to the private viewing mode. This dynamic content indicates the presence of interface display changes in the target screen region, which can be any of interface switching, interface sliding, or interface jumping. For example, playing video works, scrolling up and down to browse display content, viewing dynamic images, or the like. In an optional embodiment, the private viewing mode can also be dynamically adjusted based on the pixel transformation of the dynamic content, and this dynamic adjustment is used to adjust the private viewing level under the private viewing mode.

In the case where the display in the target screen region is static content, the display mode of the target screen region is set to a lower-level private viewing mode, or set to a shared viewing mode.

Illustratively, in the case where the target screen region includes both dynamic display content and static display content, the display mode of the display region corresponding to the dynamic display content is set to the private viewing mode, and the display mode of the display region corresponding to the static display content is set to shared viewing mode.

In the embodiments of the present disclosure, a central control region and a front passenger region are provided in the in-vehicle screen. The central control region includes a front passenger-use region that can be controlled by the passenger. The in-vehicle terminal freely controls the display mode of the target screen region, which includes the front passenger region and the front passenger-use region. In the private viewing mode, the driver is effectively prevented from seeing the display content in the target screen region, reducing the driving interference to the driver. In the shared viewing mode, the target screen region can meet the simultaneously viewing requirement of the passenger and the driver, achieving a dynamic privacy effect.

In an optional embodiment, different private viewing levels are determined for the in-vehicle screens, which not only protects the privacy of the passenger operating the target screen region but also ensures that the visual information in the target screen region cannot be read by the driver, effectively improving the driving safety of the driver.

In an optional embodiment, determining different private viewing levels can, on the one hand, be directly reflected in the display luminance, thereby preventing the display brightness of the target screen region from decreasing too much while providing privacy against the driver, so as to avoid an impact on the browsing experience of the passenger. On the other hand, based on the relative change in light intensity that can occur within the peripheral vision range of the driver, the accurate value at which the target screen region is not visible to the driver is reasonably determined, further improving the privacy effect on the driver.

In an optional embodiment, different regions within the target screen region are determined based on the position of the driver/passenger and the real-time ambient light intensity of the region, providing support for further partition privacy protection.

In an optional embodiment, different privacy sub-modes are determined for different regions of the target screen. When controlling these different regions, the private viewing modes are dynamically switched, which not only enhances the comprehensiveness of privacy effect implementation but also improves privacy flexibility.

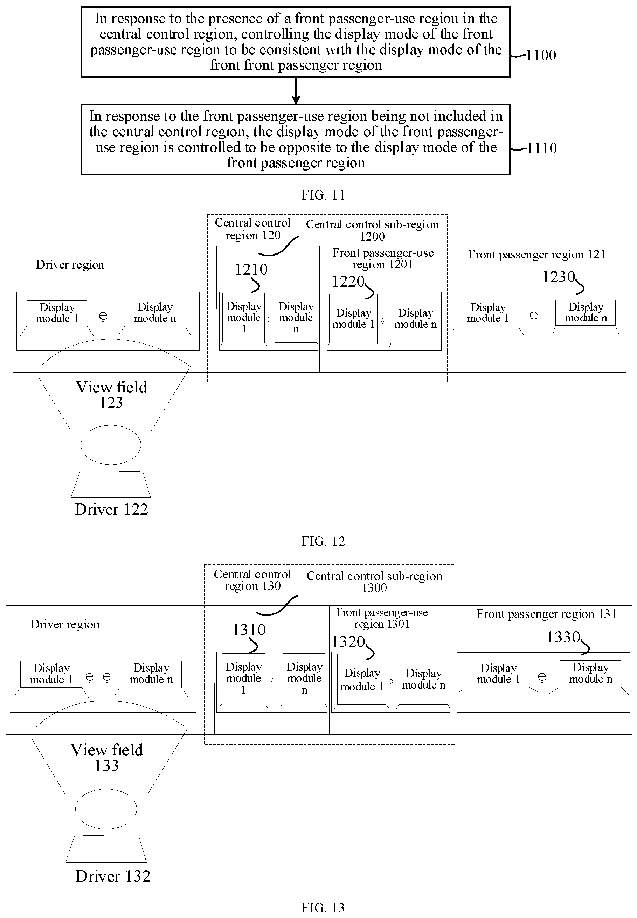

FIG. 11 is a flowchart of an in-vehicle display method according to some embodiments of the present disclosure, which is described with the method applied to an in-vehicle equipment provided with an in-vehicle screen. As shown in FIG. 11, the method includes the following processes.

In process 1100, in response to the presence of a front passenger-use region in the central control region, the display mode of the front passenger-use region is controlled to be consistent with the display mode of the front passenger region.

Optionally, the in-vehicle equipment performs real-time monitoring of the display region in the central control region.

When a new front passenger region is detected in the central control region, the display content in the central control region changes, which inevitably leads to changes in visual information. The driver may perceive these changes in visual information within their view field. In this case, the display mode of the front passenger region determines the display mode of the front passenger region.

Optionally, the display mode of the front passenger region in the current state is acquired, which can be either shared viewing mode or private viewing mode.

In the embodiments of the present disclosure, when it is detected that a front passenger-use region is included in the central control region and the front passenger region is in the private viewing mode, the front passenger-use region is controlled to be in the private viewing mode.

When it is detected that a front passenger region is included in the central control region and the front passenger region is in the shared viewing mode, the front passenger region is controlled to be in the shared viewing mode.

Optionally, the above process 1100 can also be implemented to control the display mode of the front passenger-use region to be consistent with the display mode of the front passenger region, in response to receiving a control operation in the front passenger-use region within the central control region.

In another optional embodiment, in response to a control operation received by the target region within the front passenger-use region in the central control region, the display mode of the target region is controlled to be consistent with the display mode of the front passenger region.

The target region is at least one of the following regions.

The regions are: the upper portion of the front passenger-use region;
the lower portion of the front passenger-use region;
the middle portion of the front passenger-use region;
the left portion of the front passenger-use region; or
the right portion of the front passenger-use region.

In process 1110, in response to the front passenger-use region being not included in the central control region, the display mode of the front passenger-use region is controlled to be opposite to the display mode of the front passenger region.

During the monitoring process of the central control region by the in-vehicle equipment, in the case where no new front passenger-use region is detected in the central control region, it indicates that the original display content in the central control region does not cause any interference to the driver's line of sight. In other words, the central control region is visible to the driver in this situation.

When the presence of a front passenger-use region in the central control region is not detected, the display mode of the front passenger region should be opposite to the display mode of the driver region.

Optionally, when it is detected that the central control region has not been expanded to include a front passenger-use region and the front passenger region is in the private viewing mode, the central control region is controlled to be in shared viewing mode;

When it is detected that no additional front passenger-use region is included in the central control region and the front passenger region is in shared viewing mode, the central control region should be controlled to enter private viewing mode.

As shown in FIG. 12, FIG. 12 illustrates the schematic diagram of the working principle of the display module inside the in-vehicle screen in the private viewing mode. The central control region 120 includes a central control sub-region 1200 and a front passenger-use region 1201. Under the central control sub-region 1200, there are a plurality of display modules 1210, under the front passenger-use region 1201, there are a plurality of display modules 1220, and under the front passenger region 121, there are a plurality of display modules 1230. In the private viewing mode, it is necessary to ensure that the light rays of the plurality of display modules 1220 are outside the view field 123 of the driver 122. Optionally, the light rays emitted from the left side of the plurality of display modules 1220 are in a vertical state.

As shown in FIG. 13, FIG. 13 illustrates the schematic diagram of the working principle of the display module inside the in-vehicle screen in shared viewing mode. The central control region 130 includes a central control sub-region 1300 and a front passenger-use region 1301. Under the central control sub-region 1300, there are a plurality of display modules 1310. Under the front passenger-use region 1301, there are a plurality of display modules 1320. Under the front passenger region 131, there are a plurality of display modules 1330. In the private viewing mode, it is necessary to ensure that the light rays from the plurality of display modules 1320 are within the view field 133 of the driver 132.

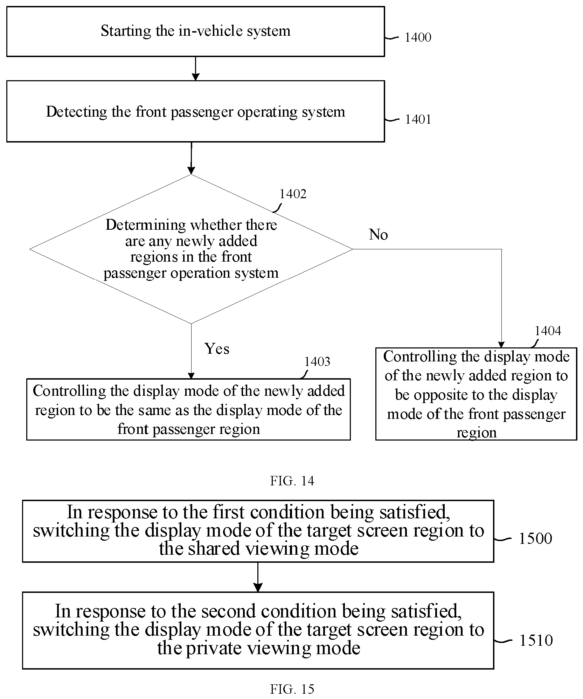

FIG. 14 is a flowchart of another in-vehicle display method based on the embodiment shown in FIG. 13. The method includes processes 1400 to 1404.

In process 1400, the in-vehicle system is started.

Optionally, the in-vehicle equipment is in operation, which includes at least one of a driving state, a shutdown state, or a standby state.

Optionally, the passenger or the driver can activate the in-vehicle system, turn on the in-vehicle screen, and determine the screen status of the driver region, the central control region, and the front passenger region. The screen status includes the screen-on state and the screen-off state.

In process 1401, the passenger operating system region is detected.

The passenger operating system region includes the front passenger-use region in the central control region, and/or the front passenger region.

Optionally, whether the screen of the front passenger-use region and the front passenger region is in operation is detected.

In response to the front passenger-use region and/or the front passenger region being in a screen-on state, the following processes 1401 to 1404 is performed.

In process 1402, whether there are any newly added regions in the passenger operation system is determined.

In the case where there are new regions, the processes 1403 described below is performed.

In the case where there is no new region, the process 1404 described below is performed.

In process 1403, the display mode of the newly added region is controlled to be the same as the display mode of the front passenger region.

The implementation process of this process is the same as the above process 1110 above, which is not repeated herein.

In the embodiments of the present disclosure, a central control region and a front passenger region are provided in the in-vehicle screen, and within the central control region, there is a front passenger-use region that can be controlled by the passenger. The in-vehicle equipment freely controls the display mode of the target screen region, which includes both the front passenger region and the front passenger-use region. In the private viewing mode, the driver is effectively prevented from seeing the display content in the target screen region, reducing the driving interference to the driver; in the shared viewing mode, the target screen region can meet the simultaneously viewing requirement of the passenger and the driver, achieving a dynamic privacy effect.

In process 1404, the display mode of the newly added region is controlled to be opposite to the display mode of the front passenger region.

The implementation process of this process is the same as the above process 1110, which is not repeated herein.

In the embodiments of the present disclosure, a central control region and a front passenger region are provided in the in-vehicle screen, with a front passenger-use region within the central control region that can be controlled by the passenger. The in-vehicle equipment freely controls the display mode of the target screen region, which includes both the front passenger region and the front passenger-use region. In the private viewing mode, it effectively prevents the driver from seeing the display content in the target screen region, reducing driving distractions for the driver. In the shared viewing mode, the target screen region can meet the simultaneously viewing requirement of the passenger and the driver, achieving a dynamic privacy effect.

In an optional embodiment, the in-vehicle equipment automatically monitors the increase of the front passenger-use region within the central control region, and adaptively adjusts the display mode of the front passenger-use region based on the monitoring results. This effectively enhances the flexibility in achieving the overall privacy effect of the in-vehicle equipment.

FIG. 15 is a flowchart of a vehicle display method according to some embodiments of the present disclosure, which is described with the method applied to in-vehicle equipment equipped with an in-vehicle screen. As shown in FIG. 15, the method includes the following processes.

In process 1500, in response to the first condition being satisfied, the display mode of the target screen region is switched to the shared viewing mode.

Optionally, the first condition includes at least one of:
turning off the drive device;
content of the electronic rearview mirror being projected onto the front passenger region; or
activating autonomous driving of Level 2 or above, wherein Level 2 is semi-autonomous driving.

Under these conditions, the driver does not need to focus all their attention on driving the vehicle and can view the content displayed in the target screen region. In the case where the original display mode of the target screen region is private viewing mode, the in-vehicle equipment switches the display mode of the target screen region from private viewing mode to shared viewing mode. In the case where the original display mode of the target screen region is shared viewing mode, the in-vehicle equipment maintains the display mode of the target screen region.

In process 1510, in response to the second condition being satisfied, the display mode of the target screen region is switched to the private viewing mode.

The second condition includes at least one of:
starting up the drive device;
content of the electronic rearview mirror being not projected to the front passenger region; or
not activating automatic driving of Level 2 or above.

Under these conditions, the driver must focus all their attention on driving the vehicle and need to block the display content in the target screen region. That is, the private viewing mode is activated. In the case where the original display mode of the target screen region is the shared viewing mode, the in-vehicle equipment switches the display mode of the target screen region from shared viewing mode to the private viewing mode. I the case where the original display mode of the target screen region is the private viewing mode, the in-vehicle equipment maintains the display mode of the target screen region.

The driving device in the above processes 1500 and 1510 is configured to control the in-vehicle equipment to be in an on state or an off state. Optionally, the driving device can be implemented as any one of a fuel engine, an electric engine, a hydrogen engine, a wind engine, a hydraulic engine, a solar engine, and a nuclear engine.

The electronic rearview mirror in the above processes 1500 and 1510 is a vision detection system composed of a camera module and a processor in the in-vehicle equipment, configured to acquire indirect vision devices within a predetermined view field.

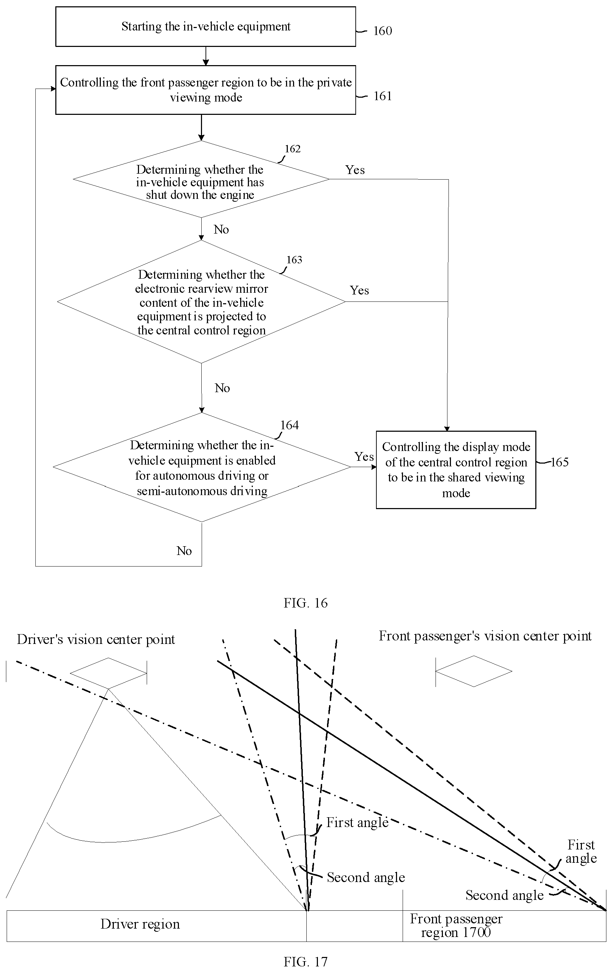

The above processes 1500 and 1510 can also be implemented as the flowchart shown in FIG. 16, which includes processes 160 to 165.

In process 160, the in-vehicle equipment is started.

The in-vehicle equipment is started.

Optionally, the driving device in the above in-vehicle equipment is utilized to control the in-vehicle equipment to be in an on state.

In process 161, the front passenger region is controlled to be in the private viewing mode.

The in-vehicle equipment adjusts the display mode of the front passenger region to a private viewing mode.

In process 162, whether the in-vehicle equipment has shut down the engine is determined.

In the embodiments of the present disclosure, the engine is implemented as a fuel engine.

In the case where the engine of the in-vehicle equipment is in the on state, the process 163 described below is performed.

In the case where the engine of the in-vehicle equipment is turned off, the process 165 described below is performed.

In process 163, whether the electronic rearview mirror content of the in-vehicle equipment is projected to the central control region is determined.

In the case where the content of the electronic rearview mirror is detected being not projected onto the central control region, the process 164 described below is performed.

In the case where the content of the electronic rearview mirror is detected to be projected onto the central control region, the process 165 described below is performed.

In process 164, whether the in-vehicle equipment is enabled for autonomous driving or semi-autonomous driving is determined.

In the case where the in-vehicle equipment is detected to be activated autonomous driving or semi-autonomous driving, the process 161 is performed.

In the case where the in-vehicle equipment is detected to be not enabled for autonomous driving or semi-autonomous driving, the process 165 is performed.

In process 165, the display mode of the central control region is controlled to be in the shared viewing mode.

Optionally, the in-vehicle equipment adjusts the display mode of the front passenger region to a shared viewing mode.

In the embodiments of the present disclosure, a central control region and a front passenger region are provided in the in-vehicle screen, with a front passenger-use region within the central control region that can be controlled by the passenger. The in-vehicle equipment freely controls the display mode of the target screen region, which includes both the front passenger region and the front passenger-use region. In the private viewing mode, it effectively prevents the driver from seeing the display content in the target screen region, reducing driving distractions for the driver. In the shared viewing mode, the target screen region can meet the simultaneously viewing requirement of the passenger and the driver, achieving a dynamic privacy effect.

Based on the above four embodiments, a detailed introduction has been given to the display method of an in-vehicle screen provided by the present disclosure. The following will provide a detailed introduction to the display principle of an in-vehicle screen provided by the present disclosure.

The above content involves three private viewing levels, including the first private viewing level, the second private viewing level, and the third private viewing level. Under different private viewing levels, the shared viewing angle of the target screen region for the driver is different. As shown in FIG. 17, the third private viewing level and the second private viewing level are taken as an example as examples for illustration. The privacy effect of the third private viewing level is higher than the privacy effect of the second private viewing level. The shared viewing angle of the display content in the front passenger region 1700 relative to the driver in the third private viewing level is shown in the dotted line part, and the shared viewing angle of the display content in the front passenger region 1700 relative to the driver in the second private viewing level is shown in the solid line part. In the third private viewing level, the original emitted light rays of the display module in the front passenger region are adjusted to deflect by a first angle, and in the second private viewing level, the original emitted light rays of the display module in the front passenger region are adjusted to deflect by a second angle. The original emitted light rays of the module in the front passenger region are shown in the dashed-dotted line part of FIG. 17.

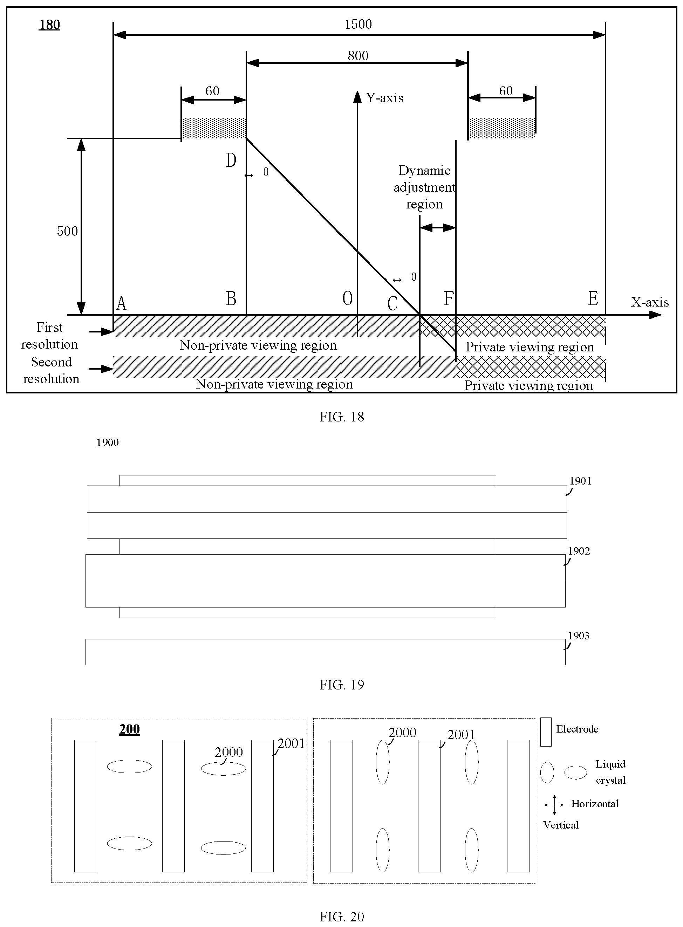

Based on the above content and FIG. 18, a coordinate system 180 is established with the center of the in-vehicle screen as the origin, as shown in FIG. 18. In the coordinate system 180 shown in FIG. 18, A represents the number of pixels in the driver region, and A to B represents the number of pixels in the dynamically adjustable region that is not a private viewing region. The spatial coordinates of the private viewing region are calculated based on the front passenger region. The driver region includes the instrument region and the non-front passenger-use region in the central control region, and the front passenger region includes the front passenger-use region in the central control region and the front passenger region. Optionally, the total length of the in-vehicle screen is 1500 mm, the distance between the visible regions of the driver and passenger is 800 mm, the distance from the driver and passenger to the screen is 500 mm, the distance between the driver and passenger is 400 mm, and the interocular distance between the driver and passenger is 60 mm. The lengths of the first, second-, and third-line segments are determined. The first line segment indicates the distance from the left edge of the driver region to the right edge of the driver visible region, for example, AB is denoted as the first line segment. The second line segment indicates the distance from the right edge of the driver's visible region to the center of the in-vehicle screen, for example, BO is denoted as the second line segment; the third line segment indicates the distance from the left edge of the driver region to the left edge of the dynamically adjustable region, for example, AC is denoted as the third line segment.

Optionally, the privacy-adjusting display panel has a plurality of display channels, including a first display channel and a second display channel.

The first screen resolution of the non-private viewing region within the first display channel is acquired. The coordinates of the first border between the non-private viewing region and the private viewing region within the first display channel are determined based on the first screen resolution, the total length of the in-vehicle screen, and the third line segment.

Optionally, the first border coordinates of the first display channel are calculated based on the following formula 1, that is, the first border coordinates are the product of the ratio of the third line segment to the first screen resolution and the total length of the in-vehicle screen.

Formula 1 is: first border coordinate / screen resolution = third line segment / total length of in-vehicle screen.

Due to the certain spacing between the first display channel and the second display channel, the distance of the projected light ray ∠θ onto the second display channel is the distance of the dynamic adjustment region.

The second screen resolution of the non-private viewing region within the second display channel is acquired. The coordinates of the second border between the non-private viewing region and the private viewing region within the second display channel are determined based on the second screen resolution, the total length of the in-vehicle screen, and the third line segment.

Optionally, the coordinates of the second border of the second display channel are calculated based on the following formula 1.

Formula 2 is: second border coordinate / second screen resolution = (length of third line segment + dynamic adjustment region) / total length of in-vehicle screen.

The first screen resolution and the second screen resolution are the same resolution or different resolutions, which is not limited in the present disclosure.

Illustratively, when the resolution of the in-vehicle screen is at the first resolution and the second resolution, the boundaries of the corresponding non-private viewing region and private viewing region are different.

First, the implementation method of display devices for in-vehicle screens is introduced.

In the following embodiments, the implementation of the in-vehicle screen as an LCD screen is taken as an example for illustration. The in-vehicle screen can also be implemented using other materials, which is not limited in the present disclosure.

Optionally, as shown in FIG. 19, the in-vehicle screen 1900 includes a privacy backlight layer 1903, a privacy adjustment panel layer 1902, and a liquid crystal display layer 1901. The following provides a brief introduction to the privacy backlight layer, privacy adjustment panel layer, and liquid crystal display layer.

The privacy backlight layer provides privacy backlight emission, and the privacy direction can be horizontal. The light emission angle range is within a predetermined angle range, such as ±25°. The backlight can be side-incident backlight, direct-lit light-emitting diode (LED) backlight, or other backlight forms. Optionally, the privacy backlight layer achieves a light emission angle of ±25° through prism film design, attaching privacy film, or other methods. Moreover, different privacy angles can be optimized through film layer designs such as prism film and privacy film.

The privacy adjustment panel layer can be switched between the private viewing mode and the shared viewing mode. The privacy adjustment panel layer includes an upper substrate, a lower substrate, a liquid crystal layer between the two substrates, and electrodes and control circuits for driving the liquid crystal. The privacy adjustment panel layer is implemented as a liquid crystal grating structure, consisting of an ITO layer, an insulating layer (such as a PVX layer), and a liquid crystal (LC) layer. The privacy adjustment panel layer also includes a liquid crystal alignment layer, an auxiliary display layer, a PS structure supporting the cell gap thickness, and a sealing adhesive around the panel. The Pixel ITO is in a strip structure, and the Com ITO is a planar electrode, and the liquid crystal fills the cell box. Optionally, the display viewing angles of the passenger and driver regions can be controlled by adjusting the control voltage. This ensures that the driver can see the desired screen region even when adjusting the seat forward or backward. The specific implementation principle is as follows. The pixel electrode period is set to the first period, such as any value within 3-10um, and the electrode width is set to a predetermined width, such as any value within 1-5um. The Cell Gap value range is within a predetermined range, such as between 3-7um. The Pixel ITO is loaded with a periodic square wave signal with a period of the first hertz, such as 60Hz or other frequency values. The maximum and minimum values of the square wave signal are denoted as max and min, respectively. The Com ITO can be a direct current (DC) signal, and the DC signal value is denoted as com. The signal magnitude needs to satisfy Vop=max-com=com-min, where Vop is the liquid crystal driving voltage value. As the driving voltage increases, the shared viewing angle increases, meeting the needs of different viewing angles.

The liquid crystal display layer is configured to provide display information, including an upper polarizer, a lower polarizer, and a liquid crystal cell disposed between the two polarizers. It is required that a transmission axis direction of the lower polarizer is consistent with the initial alignment direction of the liquid crystal in the privacy-sharing switching layer. There liquid crystal display mode or resolution is not limited.

In an optional embodiment, in order to better achieve the cooperation between the privacy adjustment panel layer and the liquid crystal display panel layer, and in order to satisfy the requirement that the scene horizontal direction is the privacy direction, the privacy adjustment panel layer is arranged with at least two electrodes and at least two liquid crystals, wherein the at least two liquid crystals are distributed between the at least two electrodes, the arrangement direction of the at least two electrodes is horizontal, and the extension direction of the at least two electrodes is vertical, and the alignment directions of the at least two liquid crystals are perpendicular to each other or parallel to each other. Optionally, the alignment directions are parallel to the at least two electrodes or perpendicular to the at least two electrodes. As shown in FIG. 20, FIG. 20 illustrates a schematic diagram of the arrangement of liquid crystals and electrodes according to some embodiments of the present disclosure. In the embodiment, the arrangement direction of the at least two electrodes 2000 is horizontal, and the extension direction of the at least two electrodes 2000 is vertical. The at least two liquid crystals 2001 are arranged perpendicular to the at least two electrodes 2000, as shown in the left block diagram 200 of FIG. 20. Alternatively, the at least two liquid crystals 2001 are arranged parallel to the at least two electrodes 2000, as shown in the right block diagram 201 of FIG. 20.

Optionally, the implementation principle of controlling the target screen region of the in-vehicle screen in one of the plurality of display modes refers to the following processes S1 to S2.

In process S1, the target screen region is controlled to be in the private viewing mode.

Optionally, the in-vehicle screen includes a liquid crystal display panel layer and a privacy adjustment panel layer. The privacy adjustment panel layer is arranged with at least two electrodes and at least two liquid crystals. For the specific arrangement of the at least two electrodes and the at least two liquid crystals, please refer to the above content, which is not repeated herein.

Optionally, the in-vehicle screen includes a driver region, a central control region, and a front passenger region, with the central control region including a front passenger-use region.

From the above, it can be seen that when the in-vehicle equipment is in the driving state, the display mode of the operable region (target screen region) for the passenger-use should be dynamically adjusted to either the private viewing mode or the shared viewing mode. The target screen region includes the front passenger-use region and/or the front passenger-use region.

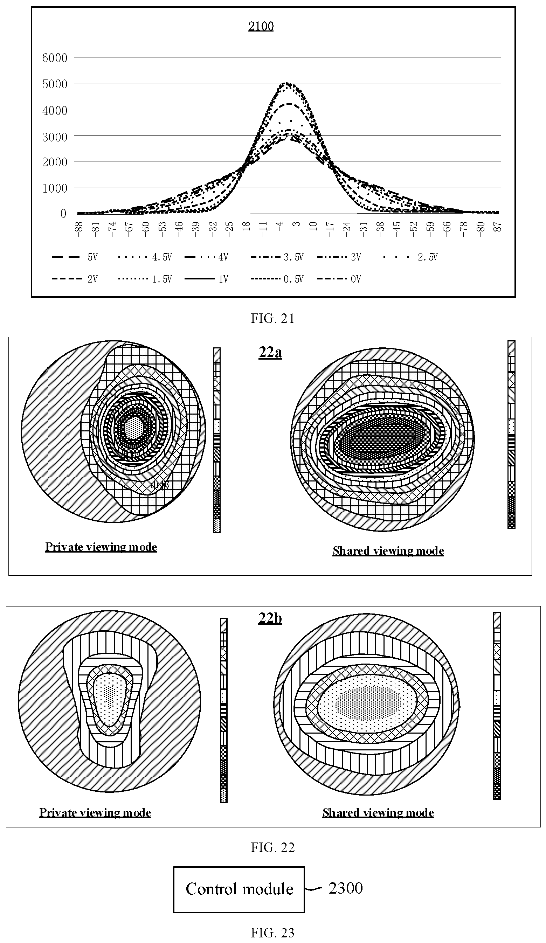

Optionally, different driving signals correspond to different viewing angles. Illustratively, as the driving voltage increases, the viewing angle for the driver becomes larger, and the shared viewing angle of the target screen region also increases. As shown in FIG. 20, FIG. 21 illustrates the viewing angle range of the display screen controlling the target screen region under different voltages. The horizontal axis in the curve graph 2100 indicates the shared viewing angle of the target screen region, and the vertical axis indicates the display luminance value of the target screen region. As can be seen from the curve graph 2100, as the driving voltage increases, the luminance of the screen region decreases, and the shared viewing angle also decreases.

Optionally, a target privacy sub-mode is determined from a plurality of privacy sub-modes, and the private viewing mode is applied to the target screen region. As can be seen from the content described in above process 500, different private viewing levels need to be determined for different regions under the target screen region in different privacy sub-modes. Different display luminance correspond to different private viewing levels, and in the embodiment, the display luminance is controlled by voltage driving signals, that is, different voltage driving signals drive the liquid crystal display panel layer to different display luminance.

In response to controlling the target screen region to be in the target privacy sub-mode, corresponding voltage driving signals are loaded onto the privacy adjustment panel layer of the corresponding region based on the private viewing levels of different regions in the target privacy sub-mode, such that at least two liquid crystals corresponding to different sub-regions in the target screen region tilt to varying degrees along the direction of the electric field lines;

Based on the degree of tilt of at least two liquid crystals corresponding to different sub-regions in the target screen region, the display luminance of the liquid crystal display panel layer corresponding to different sub-regions is determined.

Illustratively, the target privacy sub-mode is as follows. The upper portion of the central control region is at the third private viewing level, the region of the central control region other than the upper portion is at the second private viewing level, and the front passenger region is at the first private viewing level. The privacy effect of the first private viewing level is the worst, and the privacy effect of the third private viewing level is the strongest. Different private viewing levels correspond to different voltage driving signals and different display luminance. The privacy adjustment panel layer loads the first voltage driving signal for the upper portion of the central control region, causing at least two liquid crystals corresponding to the upper portion of the central control region to be at a first tilt degree. Based on the first tilt degree, it is determined that the display luminance of the upper portion of the central control region is at a first luminance. The privacy adjustment panel layer loads the second voltage driving signal for the region of the central control region other than the upper portion, causing at least two liquid crystals corresponding to the region of the central control region other than the upper portion to be at a second tilt degree; based on the second tilt degree, it is determined that the display luminance of the upper portion of the central control region is at a second luminance. The privacy adjustment panel layer loads the third voltage driving signal for the front passenger region, causing at least two liquid crystals corresponding to the front passenger region to be at a third tilt degree; based on the third tilt degree, it is determined that the display luminance of the upper portion of the central control region is at a third luminance.

In process S2, the target screen region is controlled to be in the shared viewing mode.

In response to controlling the target screen region to be in the shared viewing mode, the driving signal corresponding to the display luminance of the driver region is acquired.

The privacy adjustment panel layer applies driving voltage driving signals to at least two liquid crystals corresponding to the target screen region, causing the at least two liquid crystals corresponding to the target screen region to be in a fourth tilt degree. Based on the fourth tilt degree, it is determined that the display luminance of the target screen region is the same as that of the driver region, wherein the fourth tilt degree is configured to indicate the tilt degree of the at least two liquid crystals in the driver region under the driving voltage signal of the driver.

In the content introduced above, the privacy adjustment panel layer can also achieve different privacy effects depending on its structure. As shown in FIG. 22, FIG. 22 illustrates the schematic diagrams corresponding to the privacy effects when the privacy adjustment panel layer is implemented in different structures. When the privacy adjustment panel adopts the first structure and applies the above method for adjusting display modes, the corresponding privacy effect diagram in the upper part of FIG. 22a is acquired, wherein the visible effect corresponding to the private viewing mode is as shown on the left side of FIG. 22a, and the visible effect corresponding to the shared viewing mode is as shown on the right side of FIG. 22a. When the privacy adjustment panel adopts the second structure and applies the above method of adjusting display modes, the corresponding privacy effect diagram in the lower part of FIG. 22b is acquired, wherein the visible effect corresponding to the private viewing mode is as shown on the left side of FIG. 22b, and the visible effect corresponding to the shared viewing mode is as shown on the right side of FIG. 22b. Illustratively, the first structure is a dual twisted nematic (TN) panel (abbreviated as dual TN panel), and the second structure is a dual EBC panel.

In another optional embodiment, a plurality of display modules are arranged beneath the in-vehicle screen, and these display modules adjust the display mode of the in-vehicle screen according to different light emission angles. For the specific process of adjusting the display mode, please refer to the following processes S1and S2.

In process S1, the target screen region is controlled to be in the private viewing mode.

The target screen region includes a front passenger-use region and/or a front passenger region.

Optionally, different private viewing modes (private viewing levels) correspond to different display luminance, and the corresponding display modules also have different light emission angles.

Based on the content of above process 500, the target privacy sub-mode is determined from a plurality of privacy sub-modes. The private viewing levels corresponding to different sub-regions within the target screen region are acquired under the target privacy sub-mode.

Optionally, the private viewing levels include a first private viewing level, a second private viewing level, and a third private viewing level, wherein the privacy effect of the first private viewing level is the worst, and the privacy effect of the third private viewing level is the strongest.

In response to controlling the target screen region to be in the target privacy sub-mode, the private viewing levels corresponding to different sub-regions within the target screen region is determined in the target privacy sub-mode. Based on the private viewing levels corresponding to different sub-regions, the light emission angles corresponding to different sub-regions are determined.

The privacy adjustment panel layer adjusts the light emission angles on both sides of the display module in different sub-regions within the target screen region based on the light emission angles corresponding to different private viewing levels. The screen content is displayed based on the adjusted display module.

In process S2, the target screen region is controlled to be in the shared viewing mode.

In response to controlling the target screen region to be in the shared viewing mode, the privacy adjustment panel layer is controlled to restore the emission light angles on both sides of the display module under the target screen region to the initial emission angles. Optionally, the initial emission angles can be predetermined by relevant personnel, or initial emission angles can be the same as the light angles of the display module corresponding to the front passenger region, which are not limited in the present disclosure.

In another optional embodiment, the in-vehicle screen adjusts its display mode based on the luminance detection results from the ambient light sensor. The specific process of adjusting the display mode is described in following processes S1 and S2.

In process Sl, the target screen region is controlled to be in the private viewing mode.

The target screen region includes a front passenger-use region and/or a front passenger region.

Optionally, the in-vehicle screen includes a plurality of ambient light sensors and signal generators.

The plurality of ambient light sensors are arranged in the central control region and/or on both sides of the driving region of the in-vehicle equipment; the signal generator is used to generate different pulse modulation signals according to the private viewing levels of different regions in the privacy sub-mode.

Optionally, the ambient light luminance values captured by the plurality of ambient light sensors and the first pulse modulation signal generated by the signal generator in the current state are acquired. The second pulse modulation signal is determined based on the ambient light luminance values and the second pulse modulation signal. The backlight luminance of the target screen region is adjusted based on the second pulse modulation signal.

Optionally, the backlight luminance corresponding to different sub-regions within the target screen region can be adjusted separately based on the second pulse modulation signal. Illustratively, when the target screen region includes a front passenger-use region and a front passenger region, the ambient light luminance values captured by the plurality of ambient light sensors and the first pulse modulation signal generated by the signal generator in the current state are obtained, the second pulse modulation signal is determined based on the ambient light luminance values and the second pulse modulation signal, and the backlight luminance corresponding to the front passenger-use region and the front passenger region is adjusted based on the second pulse modulation signal.

In process S2, the target screen region is controlled to be in the shared viewing mode.

The backlight luminance of the target screen region is adjusted based on a predetermined pulse modulation signal, wherein the predetermined pulse modulation signal is configured to indicate that the backlight luminance of the target screen region is at a predetermined luminance.

FIG. 23 illustrates the structural block diagram of the display device of an in-vehicle screen according to some embodiments of the present disclosure. The device includes a control module 2300.

The control module 2300 is configured to control the target screen region of the in-vehicle screen, which is in one of a plurality of display modes.

The target screen region includes the front passenger region, and the front passenger-use region of the central control region;

The plurality of display modes includes a private viewing mode and a shared viewing mode, wherein the private viewing mode is a mode that prevents the driver from viewing the target screen region, and the shared viewing mode is a mode that allows the driver to view the target screen region.

In an optional embodiment, the front passenger-use region of the central control region is all or a portion of the central control region.

In an optional embodiment, different regions of the target screen region have at least two levels of privacy protection.

In an optional embodiment, the at least two private viewing levels differ in at least one of:
a backlight intensity;
a viewing angle range; or
a relative value of light intensity.

The relative value of light intensity is the ratio of the first light intensity to the second light intensity in the current region, wherein the first light intensity is the light intensity that is perceivable by the driver in the private viewing mode, and the second light intensity is the light intensity that is perceivable by the driver in the shared viewing mode.

In an optional embodiment, the positions of the different regions are determined based on at least one of:
a distance from the driver;
a distance from the above passenger; or
a real-time ambient light intensity in the region.

In an optional embodiment, the private viewing level corresponding to the different regions is determined based on at least one of:
a distance from the driver;
a distance from the passenger; or
a real-time ambient light intensity in the region.

In an optional embodiment, the different regions include at least two of:
the front passenger region; the left portion of the front passenger region; the middle portion of the front passenger region; the right portion of the front passenger region; the upper portion of the front passenger region; the lower portion of the front passenger region;
the front passenger-use region; the left portion of the front passenger-use region; the middle portion of the front passenger-use region; the right portion of the front passenger-use region; the upper portion of the front passenger-use region; and the lower portion of the front passenger-use region.

In an optional embodiment, the private viewing mode includes at least one of:
the front passenger-use region being at a second private viewing level, and the front passenger region being at a first private viewing level;
the front passenger-use region being at the second private viewing level, the left portion of the front passenger-use region being at the third private viewing level, and the right portion of the front passenger-use region being at the first private viewing level;
the lower portion within the front passenger-use region being at the second private viewing level, and the front passenger-use region being at the first private viewing level;
the lower portion of the front passenger-use region being at the third private viewing level, the upper portion of the front passenger-use region being at the second private viewing level, and the front passenger-use region being at the first private viewing level;
the front passenger-use region being at the third private viewing level, and the front passenger region being the first private viewing level; or
the front passenger region being at the third private viewing level, and the front passenger region being at the second private viewing level.

In an optional embodiment, the control module 2300 is configured to control the front passenger-use region to be in the private viewing mode in response to detecting that the front passenger-use region is included in the central control region and the front passenger region is in the private viewing mode.

The control module is configured to control the front passenger-use region to be in the shared viewing mode in response to detecting that the front passenger-use region is included in the central control region and the front passenger region is in the shared viewing mode.

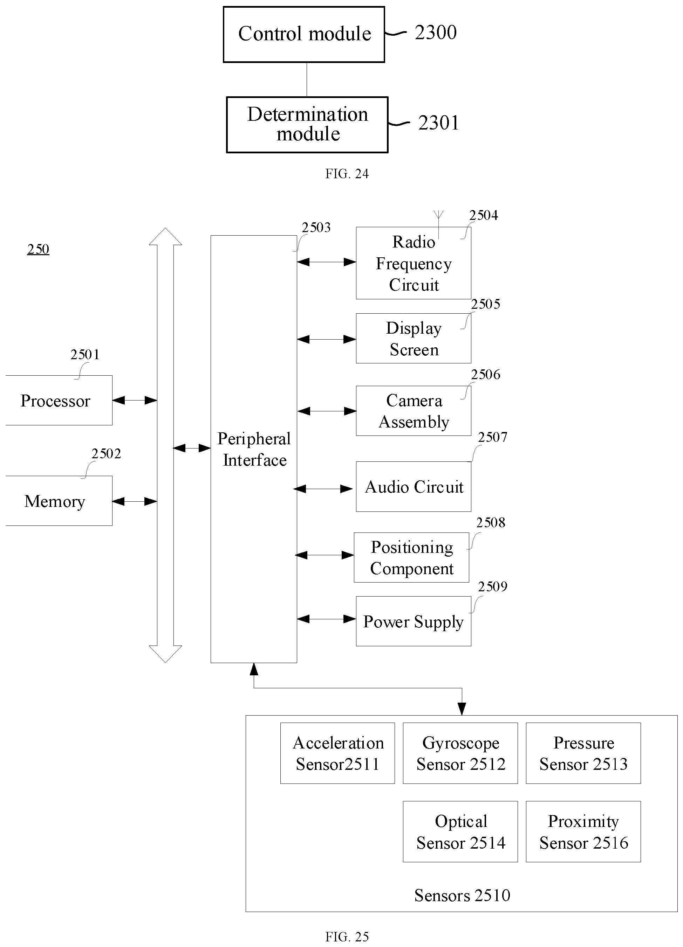

In an optional embodiment, as shown in FIG. 24, the device further includes a determination module 2301.

The determination module 2301 is configured to determine the private viewing level of at least one region in the front passenger-use region and/or the private viewing level of at least one region in the front passenger region based on the ambient light intensity captured by at least one ambient light sensor.

In an optional embodiment, the control module 2300 is configured to control the central control region to be in the shared viewing mode in response to detecting that the front passenger region is not included in the central control region and the front passenger region is in the private viewing mode.

The control module 2300 is configured to control the central control region to be in the private viewing mode in response to detecting that the front passenger region is not included in the central control region and the front passenger region is in the shared viewing mode.

In an optional embodiment, the determination module 2301 is configured to determine to switch the target screen region to the shared viewing mode in response to the first condition being satisfied.

In an optional embodiment, the first condition includes at least one of:
turning off the drive device;
content of the electronic rearview mirror is projected onto the front passenger region; or
activating autonomous driving of Level 2 or above.

In an optional embodiment, the second condition includes at least one of:
starting up the drive device;
content of the electronic rearview mirror not being projected to the front passenger region; or
activating autonomous driving of Level 2 or above.

In an optional embodiment, the determination module 2301 is configured to determine to switch the target screen region to the private viewing mode in response to the second condition being satisfied.

In summary, the display device for the in-vehicle screen provided in the embodiments of the present disclosure features a central control region and a front passenger region within the in-vehicle screen. The central control region includes a front passenger-use region controlled by the passenger. The in-vehicle equipment freely controls the display mode of the target screen region, which includes both the front passenger region and the front passenger-use region. In the private viewing mode, the driver is effectively prevented from seeing the display content in the target screen region, reducing driving distractions for the driver. In the shared viewing mode, the target screen region can meet the simultaneously viewing requirement of the passenger and the driver, achieving a dynamic privacy effect.

In an optional embodiment, the private viewing mode and shared viewing mode are switched only in the front passenger-use region within the central control region, and the remaining screen regions in the central control region remain in normal display mode. The driver retains the ability to view visual information within the central control region, the front passenger-use region offers visual flexibility, allowing control over whether it is in the private viewing mode, thus achieving dynamic adjustment of privacy display effects and effectively enhancing the driving safety of the driver.

In an optional embodiment, different private viewing levels are determined for the in-vehicle screen, which not only protects the privacy of the passenger operating the target screen region but also ensures that the visual information in the target screen region cannot be read by the driver, effectively improving the driving safety of the driver.

In an optional embodiment, determining different levels of privacy protection can, on the one hand, be directly reflected in the display luminance, thereby preventing the display brightness of the target screen region from decreasing too much while providing privacy against the driver, so as to avoid an impact on the browsing experience of the passenger. On the other hand, based on the relative change in light intensity that can occur within the peripheral vision range of the driver, the accurate value at which the target screen region is not visible to the driver is reasonably determined, further improving the privacy protection effect on the driver.

In an optional embodiment, different regions within the target screen region are determined based on the position of the driver/passenger and the real-time ambient light intensity of the region, providing support for further partition privacy protection.

In an optional embodiment, different privacy sub-modes are determined for different regions of the target screen. When controlling these different regions, the private viewing modes are dynamically switched, which not only enhances the comprehensiveness of privacy effect implementation but also improves privacy flexibility.

It should be noted that, before and during the collection of relevant user data in the present disclosure, a prompt interface, pop-up window, or voice prompt information are displayed. These prompt interface, pop-up window, or voice prompt information are used to inform the user that their relevant data is being collected. The relevant processes for acquiring the user's relevant data is executed upon acquiring the user's confirmation operation on the prompting interface or pop-up window. Otherwise (i.e., when the user's confirmation operation on the prompting interface or pop-up window is not acquired), the relevant processes for acquiring the user's relevant data are ended, that is, the user's relevant data is not acquired. In other words, all user data collected by the present disclosure is collected with the user's consent and authorization, and the collection, use, and processing of relevant user data must comply with relevant laws, regulations, and standards.

It should be noted that the audio playback device according to the above embodiment is merely exemplified based on the division of the various functional modules described above. In practical applications, the above functions are allocated to different functional modules as needed, that is, the internal structure of the device is divided into different functional modules to fulfill all or part of the functions described above. Additionally, the audio playback device according to the above embodiment and the audio playback method embodiment belong to the same concept. The specific implementation process is detailed in the method embodiment and not further elaborated here.

FIG. 25 illustrates the structural block diagram of a terminal according to some embodiments of the present disclosure. The terminal is a smartphone, tablet computer, MP3 player (Moving Picture Experts Group Audio Layer III), MP4 (Moving Picture Experts Group Audio Layer IV) player, laptop, or desktop computer. The terminal can also be referred to as user equipment, portable terminal, laptop terminal, desktop terminal, or other names, which are not limited in the present disclosure. In the embodiments of the present disclosure, the terminal is implemented as in-vehicle equipment.

Terminal 250 may also be referred to as user equipment, portable terminal, laptop terminal, desktop terminal, or other names.

Generally, the terminal 250 includes a processor 2501 and a memory 2502.

The processor 2501 can include one or more processing cores, such as a 4-core processor, an 8-core processor, or the like. The processor 2501 is implemented by using at least one hardware form of digital signal processing (DSP), field programmable gate array (FPG), and programmable logic array (PLA). The processor 2501 can also include a main processor and a co-processor. The main processor is a processor used for processing data in the awake state, also known as central processing unit (CPU). The co-processor is a low-power processor used for processing data in the standby state. In some embodiments, the processor 2501 is integrated with a graphics processing unit (GPU), which is responsible for rendering and drawing the content required to be displayed on the display screen. In some embodiments, the processor 2501 can also include an artificial intelligence (AI) processor, which is used for processing computational operations related to machine learning.

The memory 2502 includes one or more computer-readable storage medium, which may be non-transitory storage medium. The memory 2502 also includes high-speed random access memory and non-volatile memory, such as one or more magnetic disk storage devices or flash memory storage devices. In some embodiments, the non-transitory computer-readable storage medium in the memory 2502 are used to store at least one instruction, and the at least one instruction when executed by the processor 2501, causes the processor 2501 to implement the method for displaying a heatmap according to the method embodiments in the present disclosure.

In some embodiments, the terminal 250 further optionally includes a peripheral device interface 2503 and at least one peripheral device. The processor 2501, memory 2502, and peripheral device interface 2503 are connected via a bus or signal line. Each peripheral device may be connected to the peripheral device interface 2503 via a bus, signal line, or circuit board. Specifically, the peripheral devices include at least one of: a radio frequency circuit 2504, a touch display screen 2505, a camera 2506, an audio circuit 2507, a positioning component 2508, and a power supply 2509.

The peripheral device interface 2503 is configured to connect at least one input/output (I/O) related peripheral device to the processor 2501 and the memory 2502. In some embodiments, the processor 2501, the memory 2502, and the peripheral device interface 2503 are integrated onto the same chip or circuit board. In other embodiments, any one or two of the processor 2501, the memory 2502, and the peripheral device interface 2503 are implemented on separate chips or circuit boards, which is not limited in the embodiments.

The radio frequency circuit 2504 is used for receiving and transmitting radio frequency (RF) signals, also known as electromagnetic signals. The radio frequency circuit 2504 communicates with communication networks and other communication devices through electromagnetic signals. The radio frequency circuit 2504 converts electrical signals into electromagnetic signals for transmission, or converts received electromagnetic signals into electrical signals. Optionally, the radio frequency circuit 2504 includes an antenna system, an RF transceiver, one or more amplifiers, a tuner, an oscillator, a digital signal processor, a codec chipset, a user identity module card, and on the like. The radio frequency circuit 2504 can communicate with other terminals through at least one wireless communication protocol. The wireless communication protocol includes but is not limited to: the world wide web, metropolitan region networks, intranets, various generations of mobile communication networks (2G, 3G, 4G, and 5G), wireless local region networks, and/or wireless fidelity (Wi-Fi) networks. In some embodiments, the radio frequency circuit 2504 may also include circuits related to near field communication (NFC), which is not limited in the present disclosure.

The display screen 2505 is configured to display the user interface (UI). The UI include graphics, text, icons, videos, and any combination thereof. When the display screen 2505 is a touch display screen, the display screen also has the ability to capture touch signals on or above its surface. These touch signals are input as control signals to the processor 2501 for processing. The display screen 2505 is also configured to provide virtual buttons and/or virtual keyboards, also known as soft buttons and/or soft keyboards. In some embodiments, there is one display screen 2505, which is arranged on the front panel of the terminal 250. In another embodiment, there can be at least two display screens 2505, which are arranged on different surfaces of the terminal 250 or in a folding design. In still another embodiment, the display screen 2505 is a flexible display screen, arranged on the curved surface or folding surface of the terminal 250. Furthermore, the display screen 2505 can also be arranged in a non-rectangular irregular shape, also known as a non-standard screen. The display screen 2505 is fabricated using materials such as liquid crystal display (LCD) or organic light-emitting diode (OLED).

The camera component 2506 is configured to capture images or videos. Optionally, the camera component 2506 includes a front camera and a rear camera. Generally, the front camera is arranged on the front panel of the terminal, and the rear camera is arranged on the back of the terminal.

The audio circuit 2507 includes a microphone and a speaker. The microphone is configured to capture sound waves from the user and the environment, and convert the sound waves into electrical signals that are input to the processor 2501 for processing, or input to the radio frequency circuit 2504 to enable voice communication. For the purpose of stereo capture or noise reduction, there are a plurality of microphones, each located at different parts of the terminal 250. The microphones can also be array microphones or omnidirectional capture microphones. The speaker is configured to convert electrical signals from the processor 2501 or the radio frequency circuit 2504 into sound waves. The speaker is a traditional thin-film speaker or a piezoelectric ceramic speaker. When the speaker is a piezoelectric ceramic speaker, it can not only convert electrical signals into sound waves that are audible to humans, but also convert electrical signals into sound waves that are inaudible to humans for purposes such as ranging. In some embodiments, the audio circuit 2507 can also include an earphone jack.

The positioning component 2508 is configured to determine the current geographical location of the terminal 250, enabling navigation or location based service (LBS). The positioning component 2508 is a component based on the global positioning system (GPS) of the United States, the Beidou system of China, or the Galileo system of Russia.

The power supply 2509 is configured to supply power to various components in the terminal 250. The power supply 2509 is an AC power supply, a DC power supply, a disposable battery, or a rechargeable battery. When the power supply 2509 includes a rechargeable battery, the rechargeable battery is a wired charging battery or a wireless charging battery.

In some embodiments, the terminal 250 further includes one or more sensors 2510. The one or more sensors 2510 include, but are not limited to, an acceleration sensor 2511 and a gyroscope sensor 2512.

The acceleration sensor 2511 can detect the magnitude of acceleration along the three coordinate axes of the coordinate system established by terminal 250.

The gyroscope sensor 2512 can detect the body orientation and rotation angle of the terminal 250, and it can collaborate with the acceleration sensor 2511 to capture the user's 3D actions on the terminal 250. Based on the data captured by the gyroscope sensor 2512, the processor 2501 can implement the following functions: motion sensing (such as changing the UI based on the user's tilt operation), image stabilization during shooting, game control, and inertial navigation.

The pressure sensor 2513 is arranged on the side frame of the terminal 250 and/or beneath the touch display screen 2505. When the pressure sensor 2513 is arranged on the side frame of the terminal 250, it can detect the user's grip signal on the terminal 250, and the processor 2501 can recognize the user's left or right hand or perform shortcut operations based on the grip signal captured by the pressure sensor 2513. When the pressure sensor 2513 is arranged beneath the touch display screen 2505, the processor 2501 can control the operable controls on the UI interface based on the user's pressure operation on the touch display screen 2505. The operable controls include at least one of button controls, scroll bar controls, icon controls, and menu controls.

The optical sensor 2514 is configured to capture the ambient light intensity. In one embodiment, the processor 2501 can control the display luminance of the touch display screen 2505 based on the ambient light intensity captured by the optical sensor 2514.

The proximity sensor 2516, also known as a distance sensor, is usually located on the front panel of the terminal 250. The proximity sensor 2516 is configured to capture the distance between the user and the front of the terminal 250.

Those skilled in the art can understand that the structure shown in FIG. 25 does not constitute a limitation on terminal 250, and may include more or fewer components than shown, or combine certain components, or adopt different component arrangements.

Optionally, the computer-readable storage medium includes read only memory (ROM), random access memory (RAM), solid state drives (SSD), optical discs, or the like. The random access memory may include resistance random access memory (ReRAM) and dynamic random access memory (DRAM). The serial numbers of the embodiments of the present disclosure described above are merely for description and do not indicate the superiority or inferiority of the embodiments.

Those skilled in the art can understand that all or part of the processes for implementing the above embodiments can be accomplished through hardware, or through instructing relevant hardware via a program. The program can be stored in a computer-readable storage medium, and the above storage medium can be a read-only memory, magnetic disk, optical disk, or the like.

Described above are merely preferred embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. A display method for an in-vehicle screen, wherein the in-vehicle screen comprises a central control region and a front passenger region, and the method comprises:
controlling a target screen region of the in-vehicle screen to be in one of a plurality of display modes;
wherein the target screen region comprises the front passenger region and a front passenger-use region of the central control region; and
the plurality of display modes comprise a private viewing mode and a shared viewing mode, wherein the private viewing mode is a mode that prevents a driver from viewing the target screen region, and the shared viewing mode is a mode that allows the driver to view the target screen region.

2. The method according to claim 1, wherein the front passenger-use region of the central control region is all or a portion of the central control region.

3. The method according to claim 2, wherein different regions of the target screen region have at least two private viewing levels.

4. The method according to claim 3, wherein the at least two private viewing levels differ in at least one of:
a backlight intensity;
a viewing angle range; or
a relative light intensity;
wherein the relative light intensity is a ratio of a first light intensity to a second light intensity in a current region, wherein the first light intensity is a light intensity that is perceivable by the driver in the private viewing mode, and the second light intensity is a light intensity that is perceivable by the driver in the shared viewing mode.

5. The method according to claim 3 or 4, wherein positions of the different regions are determined based on at least one of:
a distance from the driver;
a distance from a front passenger; or
a real-time ambient light intensity in the region.

6. The method according to any one of claims 3 to 5, wherein the private viewing levels corresponding to the different regions are determined based on at least one of:
a distance from the driver;
a distance from a front passenger; or
a real-time ambient light intensity in the region.

7. The method according to any one of claims 3 to 6, wherein the different regions comprise at least two of:
the front passenger region;
a left portion of the front passenger region;
a middle portion of the front passenger region;
a right portion of the front passenger region;
an upper portion of the front passenger region;
a lower portion of the front passenger region;
the front passenger-use region;
a left portion of the front passenger-use region;
a middle portion of the front passenger-use region;
a right portion of the front passenger-use region;
an upper portion of the front passenger-use region; and
a lower portion of the front passenger-use region.

8. The method according to any one of claims 3 to 7, wherein the private viewing mode comprises at least one of:
the front passenger-use region being at a second private viewing level, and the front passenger region being at a first private viewing level;
the front passenger-use region being at a second private viewing level, a left region of the front passenger-use region being at a third private viewing level, and a right region of the front passenger-use region being at a first private viewing level;
a lower region of the front passenger-use region being at a second private viewing level, and the front passenger-use region being at a first private viewing level;
the lower region of the front passenger-use region being at a third private viewing level, an upper region of the front passenger-use region being at a second private viewing level, and the front passenger-use region being at a first private viewing level;
the front passenger-use region being at a third private viewing level, and the front passenger region being at a first private viewing level; or
the front passenger-use region being at a third private viewing level, and the front passenger region being at a second private viewing level.

9. The method according to any one of claims 2 to 8, wherein controlling the target screen region of the in-vehicle screen to be in one of the plurality of display modes comprises:
in response to detecting that the passenger-use region is included in the central control region and the front passenger region is in the private viewing mode, controlling the front passenger-use region to be in the private viewing mode; and
in response to detecting that the front passenger-use region is included in the central control region and the front passenger region is in the shared viewing mode, controlling the front passenger-use region to be in the shared viewing mode.

10. The method according to claim 9, further comprising:
based on an ambient light intensity captured by at least one ambient light sensor, determining a private viewing level of at least one region in the front passenger-use region, and/or determining a private viewing level of at least one region in the front passenger region.

11. The method according to claim 9 or 10, further comprising:
in response to detecting that the front passenger-use region is not included in the central control region and the front passenger region is in the private viewing mode, controlling the central control region to be in the shared viewing mode; and
in response to detecting that the front passenger-use region is not included in the central control region and the front passenger region is in the shared viewing mode, controlling the central control region to be in the private viewing mode.

12. The method according to any one of claims 9 to 11, further comprising:
in response to a first condition being satisfied, determining that the target screen region is switched to the shared viewing mode.

13. The method according to claim 12, wherein the first condition comprises at least one of:
a drive device being turned off;
content of an electronic rearview mirror being projected onto the front passenger region; or
autonomous driving of Level 2 or higher being activated.

14. The method according to any one of claims 9 to 13, further comprising:
in response to a second condition being satisfied, determining that the target screen region is switched to the private viewing mode.

15. The method according to claim 14, wherein the second condition comprises at least one of:
a drive device being turned on;
content of an electronic rearview mirror not being projected into the front passenger region; or
autonomous driving of Level 2 or higher being not activated.

16. A display apparatus for an in-vehicle screen, wherein the in-vehicle screen comprises a central control region and a front passenger region, and the apparatus comprises:
a control module, configured to control a target screen region of the in-vehicle screen to be in one of a plurality of display modes, wherein the target screen region comprises the passenger region and a front passenger-use region of the central control region;
wherein the plurality of display modes comprise a private viewing mode and a shared viewing mode, wherein the private viewing mode is a mode that prevents a driver from viewing the target screen region, and the shared viewing mode is a mode that allows the driver to view the target screen region.

17. A computer device, comprising a processor and a memory, wherein one or more programs is stored in the memory, and the one or more programs, when loaded and executed by the processor, causes the processor to perform the display method as defined in any one of claims 1 to 15.

18. A computer-readable storage medium, wherein one or more programs is stored in the computer-readable storage medium, and the one or more programs, when loaded and executed by a processor, cause the processor to perform the display method as defined in any one of claims 1 to 15.

19. A computer program product, comprising one or more computer programs, wherein the one or more computer programs, when executed by a processor, causes the processor to perform the display method as defined in any one of claims 1 to 15.
